# EUROPEAN PATENT SPECIFICATION

(11) **EP 1 502 397 B1**
(45) Date of publication and mention of the grant of the patent: **27.09.2006**
(21) Application number: 03738894.9
(22) Date of filing: 02.05.2003
(51) Int. Cl.: H04L 12/56

(54) **FLEXIBLE SCHEDULING ARCHITECTURE FOR QUEUES IN A PACKET SWITCHED NETWORK**
FLEXIBLE ARCHITEKTUR ZUR PLANUNG VON WARTESCHLANGEN IN EINEM PAKETVERMITTELTEN NETZ
ARCHITECTURE D'ORDONNANCEMENT FLEXIBLE POUR FILES D'ATTENTE DANS UN RESEAU A COMMUTATION PAR PAQUETS

(30) Priority: 04.05.2002 US 377907 P
(43) Date of publication of application: 02.02.2005
(73) Proprietor: Atheros Communications, Inc., Sunnyvale, CA 94085 (US)
(72) Inventor: CHESSON, Gregory, L., Palo Alto, CA 94301 (US); KUSKIN, Jeffrey, Scott, Mountain view, CA 94040 (US)
(74) Representative: Flint, Adam
(86) International application number: PCT/US2003/013755
(87) International publication number: WO 2003/094451

(56) References cited:
- DE-C- 19 907 085
- US-A- 6 052 375
- US-B1- 6 198 723

## Description

The present invention relates to a method for scheduling a plurality of streams of data to form a single output stream of data and apparatus for determining priority in a communication system that has a priority scheme with a predetermined number of available priorities.

The present invention relates generally to a hardware control engine, and particularly a hardware control engine that can provide for the aggregation of multiple streams, particularly into a single channel. Thus, aggregation of different streams having comparable priority is achieved using an architecture that allows for configurable priority among the different streams as well as the ability to implement a variety of different protocols using the same hardware control engine.

Computer systems often aggregate data from different devices or sources, particularly onto a single channel. For example, in a simple computer system that contains a keyboard, a mouse, a display and a printer, data from each of these various devices will need to be processed by the central processor. In many early systems, these various devices caused a hardware interrupt, which caused the central processor to pay attention to the particular device asserting the interrupt, so that the associated data could be obtained.

As networks have become more sophisticated, so have the schemes for aggregating data. For example, certain systems require a single stream being transmitted through a single interface, such as in certain wireless networks. It is conventional to provide a network interface controller with a single queue, with descriptors from each of the multiple data streams being placed in a single output queue. These descriptors are used to then obtain and then transmit each packet of data. In particular, in the context of data being transmitted according to requirements set forth by IEEE Standard 802.11, the wireless LAN medium access control (MAC) layer will use descriptors from an output queue to obtain a single stream of data. This data can then be routed to the physical layer (PHY) for transmission through the air.

There are, nonetheless, certain non-wireless systems that obtain a single stream of data using multiple queues. These systems, however, provide for specific queues that meet the specific requirements of the systems for which they are intended.

Thus, for instance, Ethernet interfaces exist that have one or two priority queues. As another example, the GSN SHAC (Super Hippi Adapter Chip) has four output queues―one for each of four physical connections supplied by the hardware, but the output queues are limited to supporting this specific hardware, and are not intended for use in any other system. Further, asynchronous transfer mode ("ATM") adapters use a number of different rate-controlled queues used to send what is termed constant bit-rate (CBR) data (which in reality is constant frame rate data) such as MPEG video, but these queues are limited to providing data at the various rates associated with each of the different queues.

Thus, while it is commonplace to provide a NIC, typically formed on a single integrated circuit chip, that contains either a single output queue or a small number of queues each directed to a specific purpose, such as either priority or rate control, a flexible architecture that allows for the different types of output operations to occur depending upon a user-desired configuration has not been achieved.

Various different types of output control can exist for a device in a communications system. For example, they may include rate control outputs in which data is output at a constant rate (typically on a per-frame basis, such as with MPEG-1 and MPEG-2). Also, priority control outputs exist in which certain data to be output has priority over other data to be output. Polling control outputs also exist in which a poll with data is transmitted with a poll, and an acknowledgement with or without data attached thereto is received from an external device to indicate receipt and respond, at which time another acknowledgement may be sent, depending upon the protocol, to the external device indicating receipt of the acknowledgement. It should be noted that polling control outputs is different than a device being polled, since a device being polled, such as the external device mentioned above, is responding to receipt of a poll rather than generating a poll, although in certain systems a particular device can poll and also be polled. Polling as used herein can refer to generating polls as well as responding to polls.

To date, systems do not have the ability to easily switch between various different types of output control. Thus, a flexible architecture that allows both priority and rate control outputs, or rate control and polling outputs, or any combination of normal FIFO, prioritized, rate control, and polling outputs would be desirable, particularly when used to implement wireless communications.

Further, a hardware control engine that provides such a flexible architecture also has advantages in being able to implement a hardware scheduler, as well as other components, which have usefulness in contexts other than wireless communications media access control.

DE-C-19907085 discloses a method for the transmission of packet-switched data in a radio communication system in which one individual queue of data packets is provided per connection in a base station.

US-B-6198723 discloses an ATM (asynchronous transfer mode) traffic shaper.

According to a first aspect of the present invention, there is provided a method for scheduling a plurality of streams of data to form a single output stream of data, each of the plurality of streams of data including a plurality of packets, the method comprising the steps of: providing a plurality of queue control units that are each capable of accessing at least one of the plurality of streams of data and a plurality of data control units that are each capable of implementing a specific channel access protocol on at least one of the plurality of streams of data, with each queue control unit having a queue output data path capable of being coupled to a data input data path of one of the plurality of data control units; operating selected ones of the plurality of queue control units in parallel and selected ones of the plurality of data control units in parallel such that: each selected one of the queue control units accesses an associated one of the plurality of streams of data and provides the associated one stream of data to an associated selected one of the data control units coupled thereto; and, each associated selected one of the data control units outputs the associated one stream of data using the specific channel access protocol associated therewith; and, obtaining the single output stream of data from the plurality of streams of data by prioritizing each of the plurality of streams of data obtained from the selected ones of the plurality of data control units characterised by: each of the data control units being capable of implementing a plurality of channel access protocols, said specific channel access protocol for each data control unit being selected from said plurality of channel access protocols.

According to a second aspect of the present invention, there is provided apparatus for determining priority in a communication system that has a priority scheme with a predetermined number of available priorities, the apparatus in use operating upon a plurality of data streams each containing a plurality of packets, the apparatus comprising: a plurality of queue control units, each queue control unit having a queue input for inputting one of the data streams and a queue output for outputting the one data stream; a plurality of data control units, each data control unit having a data input coupled to one of the queue outputs and a data output and further being capable of implementing a specific channel access protocol; and, a priority selector coupled to each data output, the priority selector being capable of causing the data control units to output certain ones of the plurality of packets associated with the data stream to the priority selector one at a time according to priority rules characterised by: each of the queue control units providing at least one traffic shaping function to the one data stream; and by: each of the data control units being capable of implementing a plurality of channel access protocols, said specific channel access protocol for each data control unit being selected from said plurality of channel access protocols.

A method and apparatus is described that provides multiple queues that can each be separately operated upon, so that various combinations of outputs result, including normal FIFO, prioritized, rate control, and polling outputs.

In a preferred embodiment is described a scheduling architecture, including a plurality of queues each within an associated queue control unit, and a plurality of data control units. The queue control units are directed to operations that obtain data for transmission of a stream from a host and ensure that it is available for transmission, preferably as a single stream. The data control units are each directed to operations that format the data from the queue control units in dependence upon the transmission (or channel) characteristics that are to be associated with that data. Further, each queue control unit can configurably be input to any of the data control units. In one embodiment the output of each of the data control units is controlled by a data arbiter, so that a single stream of data is obtained.

In a specific implementation, the scheduling architecture is applied to a media access control for a wireless communication system, and the output from the data arbiter can be transmitted to a protocol control unit so that protocol control, dependent on the particular physical layer characteristics, can take place.

Advantages of this architecture are flexibility to allow for different types of communications, such as contention based and polling based communications, to be implemented, both individually as well as different types simultaneously in the same network.

Further, this architecture provides for hardware scheduling in contexts other than wireless communication media access channel to occur.

Timing components of a hardware control engine (typically implemented within an integrated circuit chip as is known) according to the present invention can also be synchronized with external sources for managing access, such as, for instance, to an array of antennas or for send/receive operations with external timing sources, which can be useful for a variety of applications.

The present invention is illustrated by way of example, and not limitation, in the figures of the accompanying drawings in which like references denote similar elements, and in which:
Figure 1 illustrates one aspect of the architecture of the present invention.
Figure 2 illustrates a scheduling architecture according to one embodiment of the present invention;
Figure 3 illustrates a specific implementation of the scheduling architecture according to the present invention applied to a preferred wireless communication system;
Figure 4 illustrates a functional block diagram of a queue control unit (QCU) according to one embodiment of the present invention;
Figure 5 illustrates a functional block diagram of a data control unit (DCU) according to one embodiment of the present invention;
Figure 6 illustrates an exemplary functional block diagram of a traffic shaping control unit according to one embodiment of the present invention; and
Figure 7 illustrates state machine diagram for a DCU that implements a CSMA channel access method according to one embodiment of the present invention.

A flexible architecture that allows scheduling of multiple data streams for injection onto a single shared output channel, possibly a network transmission device, is described. In one embodiment, the architecture allows both priority and rate control outputs, or rate control and polling outputs, or any combination of normal FIFO, prioritized, rate control, and polling outputs. In the following description, for purposes of explanation, numerous specific details are set forth in order to provide a thorough understanding of the present invention. It will be evident, however, to one skilled in the art that the present invention may be practiced in a variety of devices, especially wireless devices, without these specific details. In other instances, well-known operations, steps, functions and elements are not shown in order to avoid obscuring the invention.

Various operations will be described as multiple discrete steps performed in turn in a manner that is most helpful in understanding the present invention. However, the order of description should not be construed as to imply that these operations are necessarily performed in the order that they are presented, or that they are even order dependent. Lastly, repeated usage of the phrases "in one embodiment," "an alternative embodiment," or an "alternate embodiment" does not necessarily refer to the same embodiment, although it may.

One advantageous aspect related to the architecture of the present invention is that it allows for traffic shaping, which, as is known, is the process of controlling the parameters used for injecting application data into a network, including rate, burst characteristics (such as periodicity and burst length) and other statistical properties (such as minimum rate, maximum rate, and mean rate). Thus, in one aspect, traffic shaping will inject data into a network at a rate corresponding to the traffic specification (Tspec) for the flow accepted for quality of service (QoS). Traffic shaping can also provide policing capability to ensure that the rate at which data in injected into a network is guaranteed, i.e. not below and/or above a certain amount.

In the context of traffic shaping, there is also the need for scheduling components upon which different traffic shaping functions are dependent and which controls the selection and ordering of multiple flows that may be contending for network bandwidth.

When used for traffic shaping, the present invention replaces the traditional single output queue, or output channel, by a succession (pipeline) of processing stages with a set of parallel datapath components at each stage. The datapath components operate relatively independently and contribute in a controllable and selectable manner.

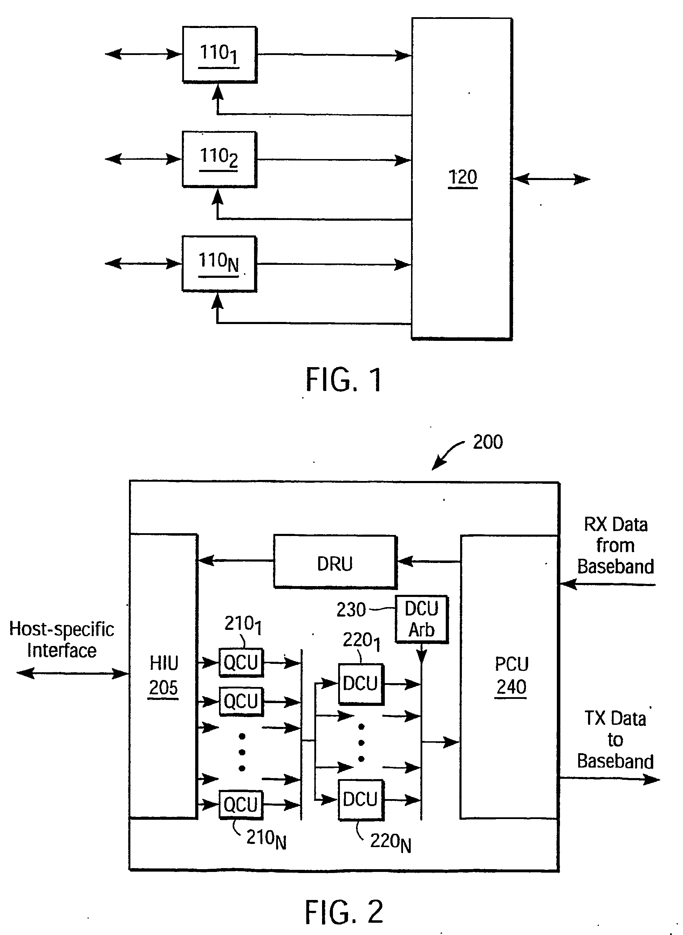

A significant aspect of the present invention is the architecture that provides for segmentation of various types of operations, such that repeatable circuit blocks are used to provide the same type of operations on various different data streams. Figure 1 generally shows a plurality of stream operation blocks 110 that are each able to input the data which they output at an appropriate time to an aggregation block 120, such that a single output stream results. As illustrated, the stream operation blocks 110 each receive signals 130 from the aggregation block 120, which allow data to be correctly formatted, as well as provide for timing. When this architecture is applied particularly to traffic shaping, the stream operation blocks 110 and the aggregation block 120 can preferably be further partitioned into various independent pipelined and parallel-operating blocks. For example, one set of circuit units can be used to ready data in different streams for transfer, whereas another set of circuit units can be used to control channel access features associated with the data, such as contention window management and backoff, such that each circuit unit is capable of implementing a different type of channel access policy, as will be described further hereinafter. This allows for many different types of scheduling to be implemented, based upon the choice of the user, as will be described further herein.

It will also become apparent that the architecture described herein, while having particular utility and usefulness in the context of traffic shaping for wireless networks, also has advantageous features that can be used in other environments. In this regard, the following detailed description will be in the context of a network, and in particular a wireless network. It will be understood, however, that other examples mentioned herein illustrate the flexibility that this architecture has and how it can be used in other contexts, such as to provide a standalone hardware scheduler that can be used in many different types of systems.

When applied to scheduling, the present invention provides a scheduling architecture. The scheduling architecture includes a first processing stage that consists of a number of queue control units (QCU) 210, which receive signals from a host interface unit 205 that provides a standardized interface to each of the QCU's 210. The QCU's 210 are each responsible for managing the direct memory access of frame data from the host, via the HIU 205, and for determining when a frame is available for transmission. The second stage consists of a number of data control units (DCU) 220, which each receive frame data from only one of the QCU's 210 at a time, but which can each receive frame data from different QCU's 210 at different points in time, as will be discussed further herein. The DCU's 220 are responsible for managing the channel access procedure on behalf of all QCU's 210 associated with it. A DCU arbiter 230 merges together the output packets. From there, when applied to a wireless network as further described hereinafter, the output packets are input to a protocol control unit (PCU) 240, which manages the final details of sending the frame to baseband logic. The QCU's 210 in this embodiment correspond to the stream operation blocks 110 in Figure 1, whereas the DCU's 220, the DCU arbiter 230 and the PCU 240 correspond to the aggregation block 120 in Figure 1.

Since the functionality of a PCU 240 will be found in any scheduling architecture of a communication system, particularly as applied to a wireless communication system, and more particularly the media access control of a wireless communication system, the discussion hereinafter will focus on those aspects of the architecture relating to the parallel-pipeline arrangement of QCU and DCU components.

On the receive side, a single DMA receive unit (DRU) 250 is connected between the PCU 240 and the HIU 205. The DRU unit 250 manages receive descriptors and transfers the incoming frame data and status to the system host via the HIU 205.

The host interface unit 205 will include a core that corresponds to the type of transmission used by the system to which the architecture 200 connects. Thus host interface unit 205 could include, for example, a Phoenix PCI core for connection to PCI bus systems, a core for connection to AHB/APB bus systems, a PCI Express^{™} bus system, or a USB core for connection to USB bus systems. The logic used within the host interface unit 205 is not of particular importance, as it could connect to other interfaces as well, although it is understood that no matter which interface the host interface unit 205 connects to, the host interface unit 205 must be able to export signals and data as described herein to the QCU's 210 and the DCU's 220 upon receipt of appropriate control signals.

As mentioned above, the user can selectively program each of the DCU's 220 for a particular mode of operation: e.g. polling, time division multiple access (TDMA), CSMA, deferred (such as with a power save mode in which packets are held until a sleep period ends), or other mode of operation, such as a specific other mode of operation (for example, a special PHY mode or a special channel access mechanism). Thus, for example, a DCU 220 can be referred to as a polling DCU or a TDMA DCU depending on how it was initialized. All DCU's 220 are preferably able to provide all of the output policies that are compatible with a particular choice of PCU 240. Note that there may be embodiments where the technical properties of the access mechanism of the PCU 240 dictate that the DCU's 220 have differences between them. But since any QCU 210 can potentially be associated with any DCU 220 and since all the DCU's 220 eventually feed into the PCU 240, there is no loss of generality or flexibility if one or more DCU's 220 have additional functionality.

PCU 240, because it implements the media access control access mechanism, is in control on an instant-to-instant basis of whether or not the current mode is polling, slotted contention or other, depending on the nature of the underlying access mechanism. If the underlying mechanism provides multiple modes, e.g. both polling and priority, then PCU 240 will select from the DCUs 220 corresponding to each mode at the appropriate interval, e.g. select from a polling DCU 220 during polling periods and select from a high-priority DCU 220 during priority periods.

A DCU 220 takes the output of a QCU 210 that is ready, signals to PCU 240 when the DCU 220 is ready to transmit by generating a readiness indication, and provides output to the PCU 240 when selected by the PCU. PCU 240 places the QCU output on the physical medium, and provides success/failure notification back to the DCU.

According to one embodiment each DCU 220 selects from the QCU's 210 connected thereto according to round robin policy, but other schemes, such as priority or weighted round robin are also possible.

PCU 240 selects from the ready DCU's 220 according to their priority level - if the PCU 240 is providing a priority service at that instant - or from polling or TDMA DCU's if the PCU 240 is providing that different service at that instant.

In light of the above overall description of the architecture 200 according to a preferred embodiment of the invention, further details regarding the QCU's 210 and the DCU's 220 will be provided. It is noted, however, that these further details can be implemented in many different manners. For example, as described, each of the QCU's 210 and DCU's 220 contain their own separate hardware, such as dedicated logic gates, which are replicated for each different unit. For purposes of understanding, as well as in certain specific implementations, having such separate hardware may be desirable in order to maximize potential throughput, as each separate hardware block can operate when the other hardware blocks are also operating. But such separation is not necessarily needed. Rather than having separate hardware for each different QCU 210 and DCU220, the same parallel functionalities can be achieved using, for instance, various different threads within a multi-threaded processor. Further, while there are advantages to replicating the architecture of the QCU's 210 and DCU's 220, that is not a requirement, as will be apparent.

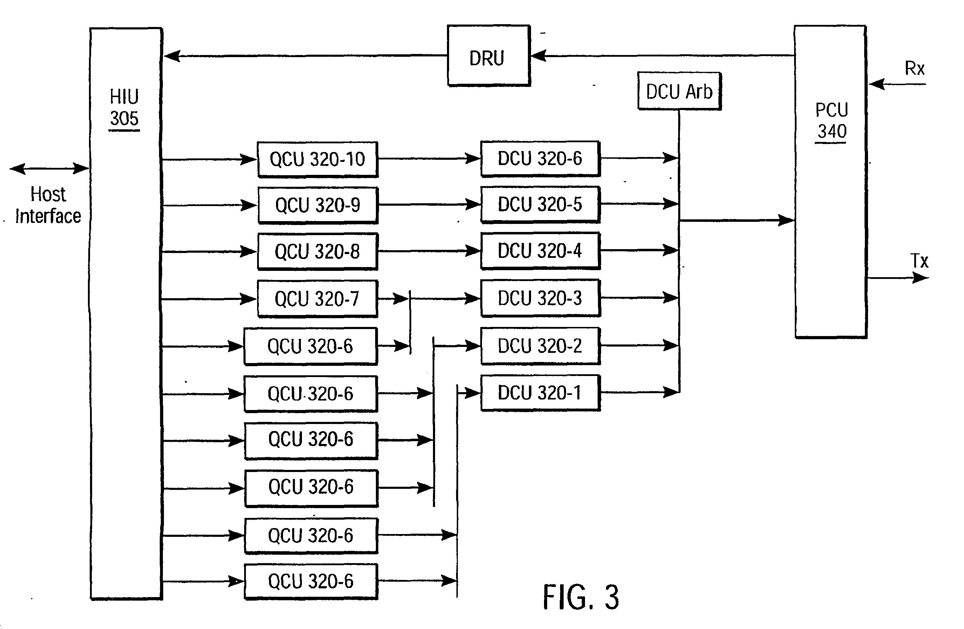

With the above in mind, Figure 3 illustrates a block diagram of an exemplary implementation of a NIC 300 that provides for both prioritization and polling in a wireless network in a system with 6 priority levels, although 10 or more priority levels could be used. As illustrated, DCU 320-6 inputs a data stream used to generate a beacon and having the highest priority from QCU 310-10. DCU 320-5 inputs another data stream that is used to generate beacon-gated frames and these have the second highest priority from QCU 310-9. DCU 320-4 and QCU 310-8 is associated with HCF polling and has the third highest priority. DCU 320-3 and QCU's 310-7 and 310-6 are at the next level of priority, DCU320-2 and QCUs 310-5, 310-4 and 3103 provide the next level of priority, and the lowest level of priority is provided by DCU 320-1 and QCU's 310-1 and 310-2. These can be used, for example, to implement the different priority levels provided by the IEEE 802.11 bridging standard, which provide traffic priority classes 0, 1, 2, 3, ....7 for best effort, background, standard, excellent effort, controlled load, video, voice and network control, in decreasing priority order. All of these classes need not be provided, and unsupported classes can be mapped into supported classes, as shown in Figure 3.

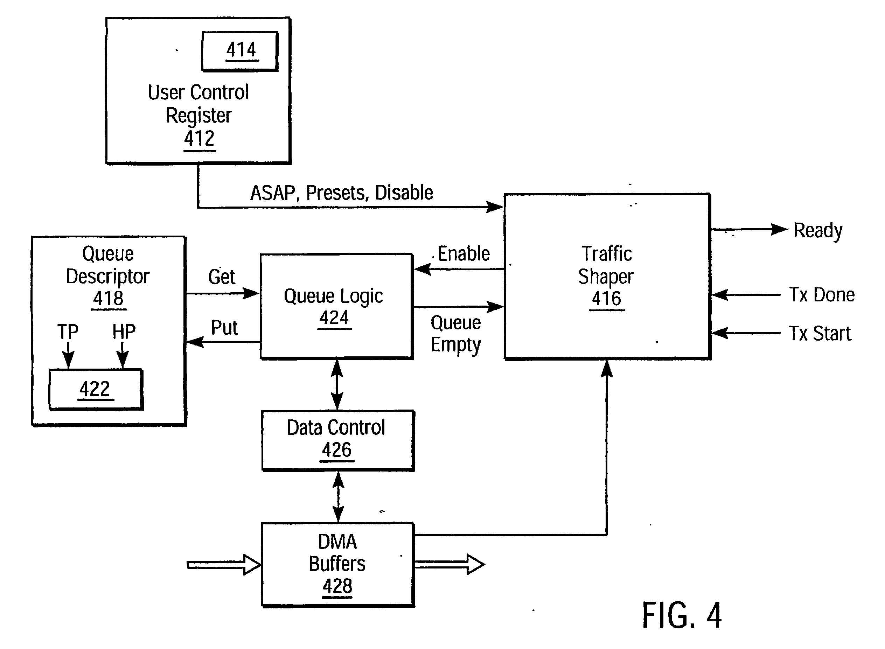

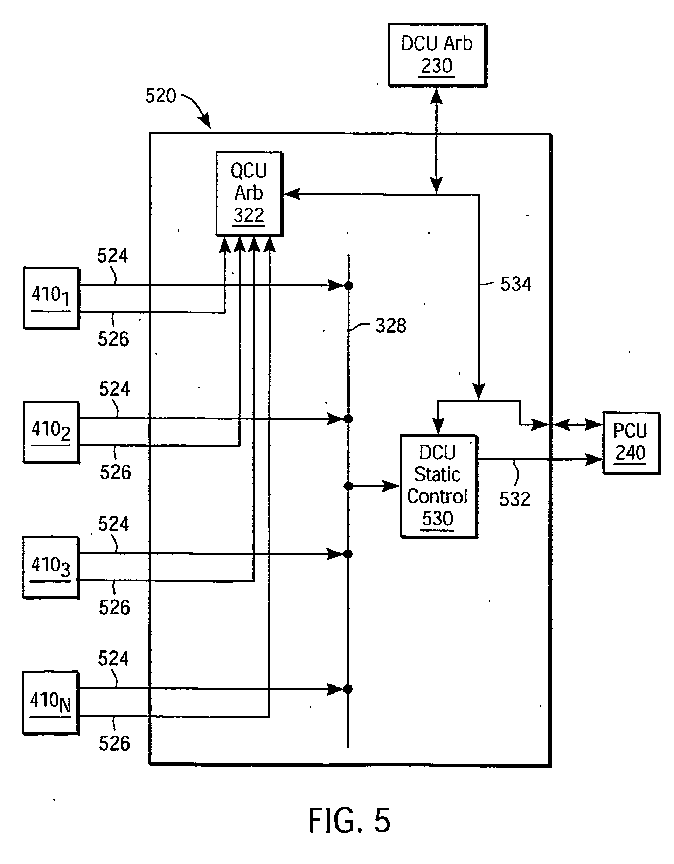

While the particular circuit elements that make up QCU's and DCU's can vary, Figures 4 and 5 will be used to provide a general description of the various functionalities of a QCU and a DCU. These will be referred to generally as QCU 410 and DCU 520, although it will be understood that the functional description provided herein is exemplary, and other combinations of functional blocks can be used to achieve the overall functionality of a QCU or DCU as described herein.

Further, before providing such description, however, it is noted that with respect to QCU's and DCU's, when used in a wireless communication media access control environment, they are intended to operate together to schedule data transfers using descriptors and status flags, in combination with control signals dependent upon the PHY layer being implemented and the channel access mechanism being used. Specific descriptors used for both transmit and receive are not necessary to understand the present invention and its advantages, but such descriptors will of course be necessary to a specific successful implementation.

### QCU IMPLEMENTATION

Each QCU 410 according to one preferred embodiment of the present invention when used for media access control in a wireless medium will preferably contain all the logic and state (registers) needed to manage a single queue (linked list) of transmit descriptors. The QCU 410 will fetch frames in dependence on the descriptor list, and provide the frames to the DCU 520, subject to the frame scheduling policy. When a QCU 410 is ready to fetch the frames, the QCU 410 will then signal to its DCU 520 that it has a frame ready for transmission. Typically, a frame ready for transmission will indicate that the frame can be fetched from the host memory and provided to the DCU 520 based upon the transmit descriptors, although the system can also be implemented in a manner that pre-fetches the frames and temporarily stores the pre-fetched frames in a local memory associated with the QCU 410.

According to one embodiment of the present invention, the QCU, illustrated in Figure 4, includes user control register 412 that includes various control registers, including the QCU ready bit register 414, traffic shaper 416, queue descriptor processing block 418 that contains a queue 422 of descriptors, queue logic 424, direct memory access (DMA) control logic 426, and DMA buffers 428.

A significant aspect of the present invention is that the traffic shaping block 416, which in essence controls the traffic associated with particular QCU 410, can be implemented in dependence on the specific requirements associated with a particular queue, as described more fully hereinafter. Thus, based on that logic, various transmit descriptors will be placed into or taken off of the queue 422 within the queue descriptor block 418 using the PUT and GET signals. A head pointer and a tail pointer will point to the first and last descriptors, respectively, in the queue 422, with each descriptor providing an indication of the operation needed in order to obtain data associated with it, as is known. As long as descriptors are within the queue 422, the queue empty signal is not generated, which the traffic shaping block 416 can use to generated the READY signal, which signal, for example, is stored in the preferred embodiment in the QCU ready bit register 414. As will be apparent from the description hereinafter, the READY state may change based upon external condition changes, which the traffic shaper 416 can respond to by causing the state of the QCU ready bit 414 to be cleared to a NOT READY state that will not generate the READY signal, as well as affect other logic within traffic shaper 416 so that the traffic shaper 416 can respond to the changed condition and continue to monitor conditions so that, when appropriate, another READY signal can be generated.

Further, the queue logic 424, the data control 426, and the DMA buffers 428 will each operate based upon the signals that derive from the traffic shaping circuit 416. As these functions are conventional, they need not be further described. As is apparent, however, as data associated with the descriptor that is operated upon is obtained and output to the DCU associated therewith, state is affected, which is shown as affecting the QCU 410 by the signals output from the DMA buffer 428 to the traffic shaper 416.

As a result of this architecture, the traffic shaping block 416 can be programmed for a particular stream that it will generate, and the other blocks within the QCU410 will operate based upon that programming. Thus, the QCU 410 can be replicated for different streams that each QCU will access, with each QCU 410 having the same architecture, while being programmed differently by having a different traffic shaping block 416.

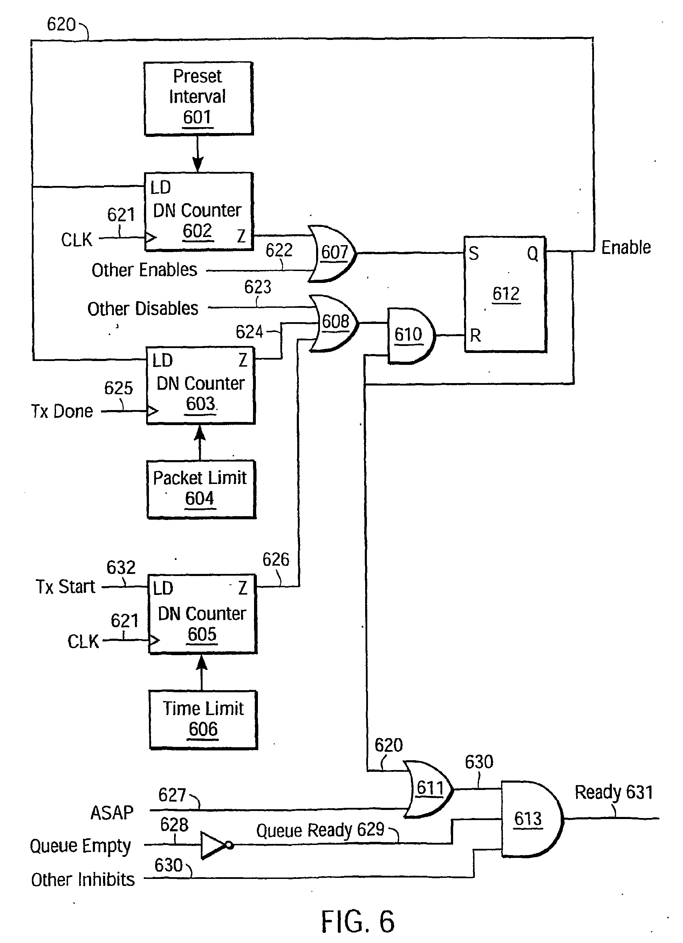

Figure 6 illustrates an exemplary traffic-shaping block 600. As shown, this figure depicts the control logic between the output queue, traffic shaper 600, and the DCU 220, but does not illustrate the data path, which is not relevant to the traffic-shaping decisions.

The objective of this generic traffic shaping circuit is to schedule controlled bursts of output packets at predetermined time intervals. The bursts are limited to a number of packets and a maximum time limit. The signals shown are positive logic.
Thus, the focus of the exemplary traffic-shaping block 600 is to set the READY bit 631 at periodic intervals determined by the DN counter 602. The SR gate 612 may be set by either the counter 602 or by other events or logic circuits 622.

The preset interval 601 provides the initial value for the time 602. The zero output of the DN counter 602 dives the S input of SR gate 612, which sets the ENABLE signal 620 that is exported to the DCU 220 as the READY signal 631 if it is not disabled by other logic elements.

The other two down counters 603 and 605 limit the number of packets per burst or the time allowed per burst, respectively. The zero output of each of these counters disables the ENABLE signal 620 by pulsing the reset input of the SR gate 612 through the gates 608 and 610. The OR gate 608 makes provision for other disabling events or logic circuit to also clear the ENABLE signal 620.

The output queue generates a QUEUE EMPTY signal 628, the inverse 629 of which implies the queue is not empty, or ready to transmit. Without traffic shaping the QUEUE READY signal would be passed directly to the DCU 220 via the READY signal 631. But the traffic shaping logic combines the QUEUE READY indication with other times and conditions that dictate the timing and burstiness of the forwarded READY signal 631.

If the ASAP signal 627 is present, the QUEUE READY signal will control READY 631 as long as the OTHER INHIBITS 630 is not clear. This ASAP mode disables traffic shaping and allows the READY signal to propagate as soon as possible (ASAP). Otherwise the READY bit 631 is propagated whenever the logic sets ENABLE 620.

The DCU 220 provides a BEGIN signal 610 when it starts to transmit packets. The DCU 220 also provides a SEND PACKET signal 609 for each packet it sends. Thus, the traffic shaper 600 provides READY to the DCU 220 when it has one or more packets to be transmitted from the output queue.

The BEGIN TX signal 631 loads the DN counter 605 with a preset time TIME LIMIT signal 606. The DN counter 605 ticks down for each CLK pulse 608 until reaching zero. The zero (Z) output 626 indicates the DN counter 605 has reached zero.

As each packet is transmitted the SEND PACKET signal 625 causes DN counter 603 to decrement from its initial value supplied as a PACKET LIMIT value 604.

It will be apparent that the exemplary traffic shaper 600 described above can instead be implemented in a variety of different way, depending upon the requirements. Thus, the above-described exemplary traffic shaping circuit 600 of Figure 6 is exemplary. The generic traffic shaping circuit 416 as illustrated in Figure 4 can be configured to provide different traffic shaping methods, such as constant bit rate, variable bit rate, externally synchronized, and others. To implement multiple methods, elements such as CBR counters, timers, limits and other elements for controlling traffic shaping can thus be located in the traffic shaper 416 as illustrated in Figure 4.

With such implementation, each QCU 410 can be programmed to provide different types of frame scheduling, for example each of the different QCU's 310 illustrated in Figure 3. For purposes of the invention, the particulars described above, as well as the considerations mentioned herein, provide the detail necessary to provide for a traffic shaper, and thus a QCU that will implement the various aspect of the present invention. In general, a QCU, such as QCU 410 in Figure 4, will typically provide one of three types of frame scheduling:

Unthrottled - the queue, with frame descriptor or sequence of frames descriptors (or frames depending on the particular QCU implementation) is marked READY, and each frame is obtained as the corresponding frame descriptor reaches the head of the queue.

**•** Time-throttled - the queue, with frame descriptor or sequence of frame descriptors (or frames depending on the particular QCU implementation) is marked READY only upon the elapse of a certain time interval (i.e., frame descriptors are held in the queue until the time interval elapses)

**•** Event-throttled - the queue, with frame descriptor or sequence of frames descriptors (or frames depending on the particular QCU implementation) is marked READY only upon the occurrence of a particular event, typically one that is detected outside the QCU.

Specific QCU frame scheduling policies that can thus be achieved using a QCU as described herein include:

**•** ASAP - - the queue, with frame descriptor or sequence of frame descriptors (or frame or frames) is marked READY and each frame is obtained as soon as it reaches the head of the queue. Frame transmission continues until the end of the queue is reached. This is an unthrottled mode.

**•** CBR ("constant bit rate"--though CBR is the acronym conventionally used, it is in fact a constant frame rate since an entire sequence of frames is transmitted each time the CBR interval elapses, without regard to the number of bits in the frames). With such a policy, the queue, with a frame descriptor or sequence of frame descriptors, (or frame or sequence of frames) is marked READY only upon expiration of the QCU's CBR interval timer. Once this timer elapses, frame transmission continues until the end of the descriptor chain in the queue is reached. Preferably, with such a policy, a CBR interval timer is immediately reset and begins counting down the next CBR interval. This is an example of time-throttled frame scheduling policy, as noted above.

In particular, with a CBR policy, each time the CBR interval elapses, the QCU increments a "CBR expired" counter. Whenever the CBR expired counter is non-zero and a frame descriptor or sequence of frame descriptors is available at the head of the queue, the QCU marks the frame descriptor or sequence of frame descriptors READY= Upon encountering the end of queue condition, the QCU decrements the CBR expired counter. If this decrement of the CBR expired counter brings the counter value to zero, then the QCU does not attempt new frame transmission until the current CBR interval elapses, at which point the CBR expired counter increments to one and frame transmission resumes. If the decrement of the CBR expired counter leaves the counter value still non-zero, then the QCU resumes frame transmission attempts immediately. In this way, the QCU attempts to "catch up" to the host's desired frames-per-CBR interval rate, even if network conditions temporarily cause the achieved frame transmission rate to fall below the desired value.

In a particular implementation according to the present invention, this "catch-up" mechanism further supports a limit on the value of the CBR expired counter. When the CBR expired counter reaches its limit, the QCU responds not by incrementing the CBR expired counter, but by dropping the next series of frames at the head of the queue, until an end of descriptor chain (also referred to as "EOL") condition is reached. This generalizes the "catch-up" mechanism from an "always catch up fully" policy to a "try to catch up fully unless the queue falls too far behind, in which case drop frame descriptors until the queue is no longer too far behind" policy.

• DBA-gated - A queue is marked READY only upon the occurrence of the DMA beacon alert (DBA), as signaled from the PCU 240 illustrated in Figure 2. Once the DBA occurs, frame transmission continues until the end of the queue is reached. This is an example of event throttled scheduling policy, as noted above.

With a DBA gated policy, the occurrence of DBA is tracked using the same "CBR expired" counter mechanism as was discussed above for the CBR scheduling policy. That is, the CBR expired counter is incremented each time DBA occurs and decremented upon reaching an end-of-queue condition. The QCU marks the queue READY whenever the CBR expired counter is non-zero.

• TIM-gated - A TIM-gated scheduling policy is the same as DBA-gated scheduling policy except that the trigger event for marking the queue READY is:

• In STA mode, the receipt of a beacon with the local station's bit set in the partial virtual bitmap within the TIM element. Note that a beacon arriving with the DTIM bit set (bit zero of the "bitmap control" field within the TIM element) but not the local station's bit within the partial virtual bitmap does not qualify as a trigger event for this frame scheduling policy.

• In AdHoc mode, the receipt of an ATIM frame directed to the local station.

**•** Beacon-sent-gated - The same as DBA-gated except that the trigger event for marking the queue READY is the successful transmission of a beacon frame from the DCU designated for beacon transmission.

TSF gated: a TSF (Timing Synchronization Function (as used in IEEE 802.11 terminology)) gated scheduling policy implements scheduling based upon signals that are synchronized with or derived from TSF in order to synchronize internal clocks and/or slots.

Externally gated: an externally gated scheduling policy implements scheduling based upon synchronization signals received from an outside source, such as, for example, antenna switching logic or other external synchronization logic in order to synchronize internal clocks and/or slots.

Other policies, in addition to frame scheduling policies can also be implemented, using certain of the above concepts, as well as other. For instance, power savings policies can be used to turn off some or all components, such as when a network interface controller chip is used. While different types of sleep states are known, that such sleep states can be triggered from power savings policies that are implemented by the same engine that implements other policies, such as scheduling and other types of policies as described herein, is considered advantageous. Thus, for example, sleep states between beacons, which many times result in periods of inactivity, can be programmed to occur. As another example, sleep states can be programmed to occur between expected incoming packets that have a known predictable arrival pattern, such as voice packets.

A number of QCU functions depend on the detection of the end of the transmit descriptor chain, the EOL condition referred to above. Three significant EOL conditions include when the QCU (1) fetches a descriptor whose LinkPtr field is NULL, (2) fetches a descriptor whose "virtual end-of-list" (VEOL) bit is set, or (3) exceeds the ReadyTime limit. The ReadyTime QCU parameter determines the maximum continuous period of time the queue indicates that it has frames ready for transmission.

When the ReadyTime function is enabled by setting the ReadyTimeEn bit, the QCU begins counting down the ReadyTime starting at the same event (i.e., the expiration of the CBR interval timer or the occurrence of DBA) that causes the queue to be marked ready. Thereafter, normal frame processing occurs until the ReadyTime duration expires. At this point the QCU ceases marking frames ready even if it has not yet encountered one of the other two end-of-queue conditions.

The ReadyTime function may be enabled only with a non-ASAP frame scheduling policies. It may not be used with the ASAP policy.

In most cases the three end-of-queue conditions mentioned above are treated identically, with two exceptions:
- The QCU signals an EOL interrupt only if a descriptor's LinkPtr is NULL.
- The QCU by default does not clear the TXE bit on occurrence of VEOL or the expiration of ReadyTime. The QCU clears TXE only when it encounters a NULL LinkPtr. A register bit within each QCU can be set to change this policy so that the QCU clears TXE for VEOL and ReadyTime expiration.

### DCU IMPLEMENTATION

Whereas the QCU is generally concerned with implementing access to data associated with a particular stream, the DCU, in the preferred wireless communication environment, is generally concerned with implementing the protocol procedures of the channel access method associated with the particular data, which formatting is dependent upon a specific channel access protocol. Further, if desired, final formatting can also be performed by the DCU is desired, such final formatting including, for example, error check coding, cryptography or compression. Thus, each of the DCU's is programmed in a manner that becomes protocol dependent. Thus, as mentioned previously, the DCU manages the channel access procedure. In doing so, associated with each DCU are DCU state variables, such as contention window ("CW"), CWMAX, CWMIN, retry, and associated counts. Further, in conjunction with signals received from PCU 240, in the preferred wireless communication environment, each DCU will decide whether to retransmit or abandon a frame.

Figure 5 illustrates a functional block diagram of a DCU 520 in the preferred wireless communication environment. An arbitrary number of QCU's 410 are connected to the DCU (four are shown), with the READY signal capable of being input from each of the QCU's 410 associated with this particular DCU 520 into the QCU arbiter 522 along READY input line 524. As explained in further detail hereinafter, QCU arbiter 522 will select one of the QCU's 410 based upon some priority, as described further herein, and input the data corresponding thereto along one of the data input lines 526. This data, from whichever of the QCU's 410 it comes from, is transmitted along data bus 528 and is output to PCU 240 illustrated in Figure 2, under the control of the DCU state control logic 530. The DCU state control logic 530 and the QCU arbiter 522 both receive and transmit control signals to the PCU 240 along control lines 534.

In operation, the DCU 520 begins channel arbitration by determining whether any of the associated QCU's 410 has a frame ready for transmission. The DCU makes this determination using QCU arbiter 522, which logically ANDs each of the QCU READY bits with a QCUMask register to arrive at a set of QCU's that are both associated with the DCU and have a frame available. If more than one QCU is ready is not relevant to the DCU 520 at this point in the sequence.

For the QCU 410 selected, the DCU 520 will then initiate a sequence that may result in the input of the data associated with one of the QCU's 410 in the set, so that the DCU state control logic 530 can then operate to determine how to format that data for the associated channel access procedure.

In particular, in the context of an 802.11 environment, the DCU state control logic 530, if programmed for an EDCF contention access method, will perform an EDCF channel access procedure, meaning it waits until the channel has been idle for at least an AIFS (if the channel has not already been idle for this long) and then attempts transmission or, if the channel is found to be busy or becomes busy, it generates a backoff count and CW value and begins counting down the backoff slots. At some point, the DCU state control logic 530 determines that frame transmission is "imminent." The definition of "imminent" would, in theory, be when the DCU's state control logic backoff count reaches zero, but in practice needs to be somewhat more conservative to allow time to fetch the frame data and forward it to the PCU 240 before the PCU 240 actually needs to put the frame on the air. Thus the DCU state control logic 530 might, for instance, determine that frame transmission is imminent when a frame is available and the backoff count is less than or equal to four (the threshold for the "imminent" determination preferably being software programmable). Regardless of the actual threshold value, once the DCU state control logic 530 determines that frame transmission is imminent, it asserts a DCUReady signal to the DCU arbiter 230 illustrated in Figure 2. The DCU arbiter 230 inspects the DCUReady inputs from each DCU 520 and selects the highest-priority DCU per the priority levels noted above and asserts a DCUGO signal to the selected DCU 520 and DCUCollision signals to the other ready but lower-priority DCU's 520.

The selected DCU 520 now proceeds to select the QCU 410 to be the source of the frame. To do so, the DCU 520 again operates using QCU arbiter 522, and again logically ANDs the QCU READY bits with the QCUMask value and passes the result into a round-robin priority encoder within the QCU arbiter 522. The encoder's output identifies the QCU 410 that will be the source of the next frame in a preferred operational sequence, although all frames associated with a particular QCU may be transmitted together if a different operational mode is desired, although typically this is not preferred. Note that the selected QCU 410 might not be the one that caused the DCU 520 to begin arbitrating for the channel. Once the DCU 520 has selected the QCU 410, it signals the selected QCU 410 to begin DMA of the frame data from host memory (or from the temporary memory within the QCU as alternatively mentioned above). Note also that the actions taken by the DCU 520 in selecting a particular QCU 410 to be the source of the next frame impose a transmission order on the QCUs, effectively providing a transmission schedule for frames.

The DCU state control logic 530 places the frame data into a prefetch buffer and, simultaneously, drives the data from the prefetch buffer to the PCU 240. In addition to the frame data itself, the DCU 520 also conveys to the PCU 240:

• The control information from the transmit descriptor; and

• A tag that identifies the DCU 520 and QCU 410 from which the frame originated, in an order that is further described below with respect to the PCU FIFOS described below.

The DCU state control logic 530 now waits (if needed) until the EDCF channel access requirements have been met (backoff count is zero, channel has been idle for at least an AIFS, etc.) and then indicates to the PCU 240 to begin frame transmission on the air.

The PCU 240 then initiates transmission of the frame and reports the result to the DCU state control logic 530 that sourced the frame. Once the PCU 240 has completed the frame transmission attempt, it must report the results to the DCU 520 that sourced the frame. The transmission attempt results include:

**•** An indication of whether the frame was

**•** Sent successfully (that is, sent on the air and received a valid ACK if one was expected)

**•** Sent on the air, but no ACK was received

**•** Never sent on the air because the RTSCTSEN bit was set, an RTS was sent on the air, but no CTS was received

**•** The remaining status indications as specified in the transmit descriptor completion status

Another PCU 240 responsibility is to report CCA information to the DCU's 520 so that the DCU's 520 can properly implement the EDCF channel access state machine. The PCU 240 continuously reports to the DCU 520 when the channel is busy, taking into account both when the channel is physically busy and when the channel is virtually busy, as indicated by the NAV or other 802.11 protocol state. In order to enable TDMA applications, PCU 240 will include a CCA disable signal, which can come from an external source, for example, the network interface controller chip that can make up the NIC, or an external antenna controller

To allow the DCU's 520 to begin transferring the next frame to be sent to the PCU 240, the PCU 240 implements two transmit FIFOS, each large enough to store a single, maximum-size frame (typically about 2360 bytes). As a DCU 520 transfers a frame to the PCU 240, it indicates into which FIFO the frame data is to be written. The DCU 520 then signals to the PCU 240 that the frame is complete by marking one of the PCU 240 transmit FIFOs as valid. The PCU 240 is responsible for sending frames from its two FIFOs in the same order in which the DCU's 520 marked the FIFOs valid.

The DCU's 520 attempt to optimize the case in which the PCU 240 just reported a "transmission failed" event for a frame but now the same frame is going to be retried. Thus the PCU 240 cannot assume that frame transmission alternates between the two FIFOS. In the case described, for example, the DCU520 marks the same FIFO for re-transmission without any intervening push into the other FIFO.

All frames are transferred to the PCU in the same manner:

• The DCU 520 asserts pci-txreq and drives pci-txreq-idx depending on whether the data word is to be written into FIFO 0 or I

• The PCU 240 accepts the word only if it asserts pcu-txack in the same cycle in which pci-txreq is asserted

**•** To signal to the PCU 240 that one of its FIFOs should be transmitted, the DCU 520 asserts pci-txfifo-rdy and drives pci-txfifo-idx appropriately. The pci-tX_filter, pci-tx-seqnum, and pci-tx-retry signals are valid in the same cycle in which the DCU 520 asserts pci-txfifo-rdy.

The sequence of data words transferred into the FIFO is:

• The first and second data words are words 2 and 3, respectively, of the first descriptor for the frame. These words contain control information (frame length, frame type, etc.) that the PCU requires to process the frame correctly.

• The next N words are the frame data, where N is the ceiling of the total frame length divided by four.

**•** The final word is a DCU-specific cookie. The PCU 240 does not interpret the contents of this word; all it does is echo the word back to the DCU 240 when the frame completes.

If the frame was sent successfully, the DCU 520 repeats the above process and selects a new frame for transmission, potentially from a different QCU 410. If, however, the PCU 240 reports that frame transmission failed, then the DCU 520 follows the backoff procedure defined in the VDCF specification and re-arbitrates for the PCU 240 on behalf of the same frame until either the PCU 240 reports successful transmission or until the frame's retry limit is reached, as controlled by the SRL/LRL DCU parameters.

Once a frame is completed, either by successful transmission or by reaching its retry limit, the DCU 520 accepts the status information from the PCU 240 and issues the necessary completion write to update the descriptor status words in host memory.

A particular type of DCU access is known as frame bursting, as mentioned above. Frame bursting is determined in dependence upon whether a ChannelTimeEn bit is set. If set, then the DCU 520 performs a frame burst each time it gains access to the channel. To manage this process, the DCU 520 initializes a timer to the value of the ChannelTime register setting and starts the timer when the DCU arbiter 230 illustrated in Figure 2 first grants the DCU 520 access to the PCU 240. The DCU 520 also indicates to the DCU arbiter 230 that it is starting a frame burst. The DCU arbiter 230 responds by continuing the grant that DCU 520 access to the channel, even if higher priority DCU's 520 become ready, until the bursting DCU 520 indicates that its burst is complete. The DCU 520 ends the frame burst when either the ChannelTime duration elapses or there are no ready QCU's 410. Note that during a burst the DCU 420 preferably continues to process ready QCU's 410 in round-robin order and that the DCU 520 terminates ChannelTime bursts only at intra-frame boundaries.

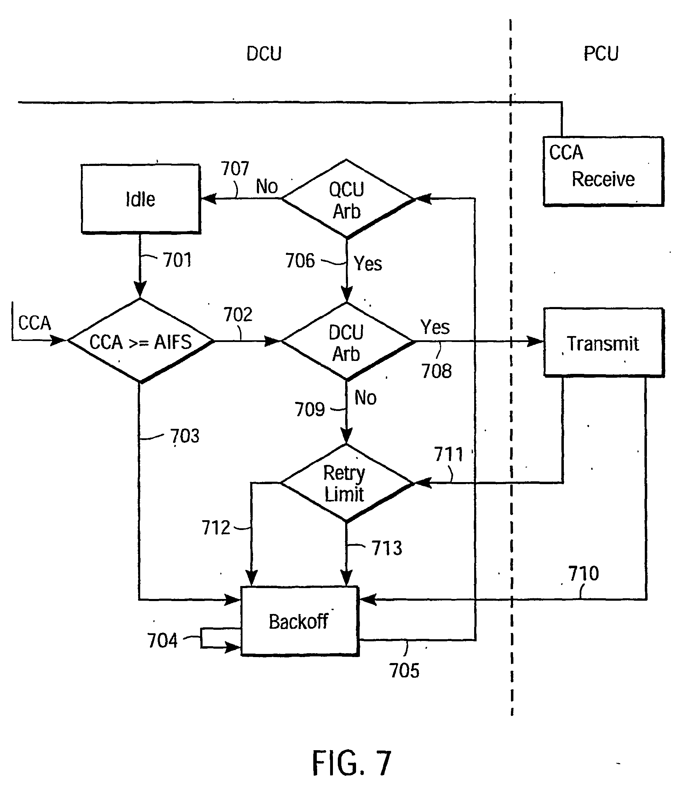

Figure 7 illustrates a particular state machine diagram for the state control logic 530 of a particular DCU 520 (and associated portions of the PCU) that implements CSMA channel access, according to one embodiment of the present invention. For this particular DCU 520, the state information used includes:

S[i] a state variable taking the valued [IDLE, BACKOFF, TRANSMIT];

BC[i] a backoff counter initialized to INF;

QSRC[i] and QLRC[i] short and long term retry counters;

CW[i], the contention window variable;

aCWmin[i] current Cwmin value;

TxAIFS[i] current IFS holdoff; and

aCWmax[i] current Cwmax value.

There are four major states for such CMA channel access protocol implementation: idle; backoff; transmission; and retry. The transitions between these states will now be described.

Idle

On arrival of a frame (701), if the medium is determined to be idle for longer than AIFS[i], then set BC[i]=0 and attempt transmission (702).

On arrival of a frame (701), if the medium is busy, then set CW[i] = aCWmin[i], BC[i] = Random(1, CW[i]+1), and proceed to the backoff state (703).

**Backoff**

For each idle timeslot subsequent to the medium having been idle for AIFS[i], decrement BC[i] (704). Arbitration timing stipulates that backoff counter BC decrements at the end of a timeslot, meaning that BC transitions from one to zero on the first timeslot after AIFS[i]. The backoff decrementing rules for EDCF count the final timeslot of AIFS as the first timeslot to sample for decrementing. Thus, a station with AIFS set to DIFS can decrement BC from 1 to 0 at the end of the AIFS period and transmit in the zeroth timeslot after AIFS, or, in this case, DIFS.

When BC[i] reaches zero (705) and there is a frame in queue[i] ready for transmission, attempt transmission (706).

If BC[i] reaches zero (705) and queue[i] does not have a ready frame, set CW[i]=INF and proceed to the IDLE state (707)

**Transmit**

TRANSMIT (708) if no higher priority backoff counter, BC[x], is zero; otherwise perform the retry procedure (709).

After a successful transmission (710), reset the appropriate retry counter(s), dequeue the frame, set CW[i]=aCWmin[i],BC[i]=Random(1,CW[i]+1), and go into BACKOFF (710).

After a failed transmission, do the retry procedure (711).

**Retry**

Increment the appropriate retry counter―QSRC[i] or QLRC[i].

If the retry limits have not been exceeded, set CW[i]=min(Cwnew[i],aCWmax), set BC[i]=random(1,CW[i]+1) and go to BACKOFF (712).

If a retry limit has been exceeded, reset the appropriate counter(s), dequeue the frame set CW[i]=aCWmin[i], BC[i]=Random(1,CW[i]+1), and go into BACKOFF (713).

As is also shown, the PCU provides a Clear Channel Assessment (CCA) signal when the wireless receiver detects that no wireless signals are present. The duration of the CCA signal is timed as part of the conditional logic 702 within the DCU in observance of the timing procedures of the channel access protocol.

As another example, if functionality related to a beacon is desired, the basic flow between QCU and DCU is as follows:

• the host receives a software beacon alert interrupt at a software-defined time before both the DMA beacon alert time and TBTT

• At DMA beacon alert (DBA), the QCU's associated with the beacon and beacon-gated frames become ready.

• Since the beacon DCU to which one of these QCU's is associated has highest priority, it will be the next source of a frame for the PCU. Thus the next frame to be passed to the PCU after the PCU finishes the frame it is presently processing will be the beacon.

• The PCU inspects the FrType field of the beacon descriptor and knows that the frame is a beacon. The PCU will use this information to delay actually transmitting the frame until TBTT occurs.

• The transmit descriptor for the beacon has its VEOL bit set. Thus after a single frame, the beacon QCU/DCU pair no longer will be marked as ready.

• At this point, the beacon-gated QCU/DCU pair becomes the highest-priority requestor for the PCU. Thus as long as the beacon-gated QCU has ready frames, it will be granted, via its DCU, access to the PCU.

• This means that the next series of frames to appear on the medium comes strictly from the beacon-gated QCU/DCU.

When the Beacon mechanism is used by an Access Point (AP), i.e. the Basic Service Set (BSS) configuration in 802.11 terminology, this flow works as described, even when the corner case of too many multicast/broadcast frames occurs. In this situation, the beacon-gated queue continues to be marked as ready. But when DBA recurs, the highest-priority beacon QCU/E)CU again is marked READY, and thus the stream of multicast/broadcast frames from the beacon-gated QCU/DCU will be interrupted by the next beacon, which is exactly the desired behavior.

This mechanism must be adapted somewhat to handle the Independent BSS (IBSS) case. In this situation, the QCU associated with beacon-gated frames will have its ReadyTimeEn bit set and its ReadyTime parameter set to the duration of the beacon period minus the SBA, and perhaps minus some queue scheduling uncertainty. Thus once this QCU commences sending frames, it self-terminates before reaching the next SBA because its ReadyTime timer expires. Software then is responsible for clean up should the queue still be non-empty. It may be necessary to put in special-case logic to detect that the corner case of failing to exhaust the beacon-gated queue has occurred and signal an interrupt or provide some other status indication to the software. This is a far simpler task than handling the situation in the QCU or DCU hardware.

The remaining IBSS corner cases - sending a directed frame only if an ATIM has been successfully sent, not sending ATIMs outside the ATIM window, and not sending non-ATIMs until the ATIM window closes - are handled by the PCU, which delays or filters outgoing frames as needed.

As mentioned above, the DCU 520 can be configured to implement many other channel access mechanisms such as polling methods where the DCU generates a poll signal to another networking device (the polled device) to stimulate a data response, or a polled method whereby the DCU sends data only after receiving a poll signal from another device, or a Time Domain Multiple Access method (TDMA) whereby the DCU delivers data to the PCU according to a time slotting protocol. When such mechanisms as these are needed, they are programmed into the DCU state control logic 530, as described above.

### OTHER IMPLEMENTATION CONSIDERATIONS

Since the media access controller in the preferred embodiment for wireless communications has so many transmit queues, and because software may want to track transmit-related events on a per-queue basis, per-QCU transmit interrupts are preferably provided. To implement this, it is preferable that each of the QCU's 410 generate interrupts indicating that a frame was sent successfully, a frame could not be sent successfully (retry limit reached, etc.), a frame was sent (successfully or not) and the InterReq bit in the frame's transmit descriptor was set, or that the QCU has reached the physical end of the transmit descriptor list (generated only by reaching a descriptor with a NULL LinkPtr; not generated just because the VEOL bit was set)

Thus, for the implementation illustrated in Figure 2, with 16 QCU's 410, this leads to 64 transmit-related interrupts. If the maximum size of an atomic register read is limited to 32 bits by the hardware environment, then hardware support for simulating an atomic read of an interrupt status register that is more than 32 bits wide is provided. Thus, provided are several Interrupt Status Registers (ISRs): a single primary ISR and several secondary ISR's. The primary ISR contains one bit per queue and can be read atomically. The secondary ISRs may be examined after reading the primary ISR to see which sub-bits are set and to service the QCUs identified by bits set in the primary ISR.

Software can check the nontransmit-related interrupts and can determine whether any transmit-related bits are set in the secondary ISRs with just a single read of the primary ISR. In many cases, the software does not even need to read the secondary ISRs; just knowing that some bits are set often is sufficient. The same logical ORing is used for several other ISR bits as well.

In addition, to make the read of all ISRs appear atomic, the present invention will also preferably implement shadow copies of all the secondary ISRs. On the same cycle in which software reads the primary ISR, the contents of all secondary ISRs are copied into the shadow registers. Software then can read the shadow copies of the secondary ISRs and receive a consistent view of the overall ISR state when the primary ISR was read, thus simulating an atomic read of all ISRs.

The preferred embodiment provides two ways to access the primary and secondary ISRS:

Write-one-to-clear access. When used, reads of the ISRs neither copy data to the shadow copies nor clear the ISR being read. Software can write to both the primary ISR and to the secondary ISRS. For each such write, the ISR bits for which the write data bit is a one are cleared. ISR bits for which the write data is a zero are unaffected.

Read-and-clear access. When used, only the primary ISR may be read. Each read of the primary ISR triggers a copy into the shadow registers, as described above, and clears all primary and secondary ISR bits as well, all as a single atomic operation. Writes to the primary and secondary ISRs are not meaningful (and are dropped) in this mode.

Software may intermix write-one-to-clear and read-and-clear ISR accesses.

As mentioned previously, although the architecture using multiple QCU's and DCU's has a specific advantage in the context of a media access control for wireless communications, this architecture also can be used to implement schedules, typically hardware schedules, in many environments. By having multiple units that each operate in parallel, increased throughput can be achieved.

Thus, methods and apparatus for network interface controllers and other systems with multiple different queues are described. Further, methods and apparatus that allow for reconfigurable mappings between QCU's and DCU's have been described, which allows reconfiguration as changes to the type of traffic occur. Further, methods and apparatus for scheduling have been described in the form of traffic shaping within a QCU, queue selection at the input to a DCU, and DCU selection for input to a PCU.

Embodiments of the present invention have been described with particular reference to the examples illustrated. However, it will be appreciated that variations and modifications may be made to the examples described within the scope of the present invention.

In addition to the specific variations and alternatives covered by the claims below, one or more of the following alternatives may be present in the preferred embodiments of the present invention:
the step of operating the selected ones of the queue control units in parallel includes the step of traffic shaping;
the step of traffic shaping includes setting one of a data rate and burst characteristic;
the step of traffic shaping includes setting the data rate to at least one of a maximum and minimum data rate;
the step of traffic shaping includes setting the data rate to a constant data rate;
the step of providing provides for at least one selected queue control unit to implement unthrottled frame scheduling during the step of operating;
the step of providing provides for at least selected queue control unit to implement time-throttled frame scheduling during the step of operating;
the step of providing provides for at least one selected queue control unit to implement event-throttled frame scheduling during the step of operating;
the step of providing provides for at least one selected queue control unit to implement one of ASAP and constant bit rate frame scheduling policies during the step of operating;
the step of providing provides for at least one selected queue control unit to implement an externally gated frame scheduling policy during the step of operating;
the externally gated frame scheduling policy is obtained from antennae switching logic;
the step of providing provides for at least one selected queue control unit to also implement a power saving sleep policy during the step of operating;
the step of providing provides for at least one selected queue control unit to implement a TSF gated frame scheduling policy during the step of operating;
the step of providing provides for at least selected queue control unit to also implement a power saving sleep policy during the step of operating;
the step of providing provides for at least one selected queue control unit to implement a power saving sleep policy during the step of operating;
the power saving sleep policy causes power savings between expected incoming packets having a predictable arrival pattern;
the power saving sleep policy causes power savings between instances of beacon generation;
the step of operating selected ones of the plurality of queue control units in parallel and selected ones of the plurality of data control units in parallel operates all of the queue control units and all of the data control units.

## Claims

1. A method for scheduling a plurality of streams of data to form a single output stream of data, each of the plurality of streams of data including a plurality of packets, the method comprising the steps of:
providing a plurality of queue control units (210) that are each capable of accessing at least one of the plurality of streams of data and a plurality of data control units (220) that are each capable of implementing a specific channel access protocol on at least one of the plurality of streams of data, with each queue control unit (210) having a queue output data path capable of being coupled to a data input data path of one of the plurality of data control units (220);
operating selected ones of the plurality of queue control units (210) in parallel and selected ones of the plurality of data control units (220) in parallel such that:
each selected one of the queue control units (210) accesses an associated one of the plurality of streams of data and provides the associated one stream of data to an associated selected one of the data control units (220) coupled thereto; and,
each associated selected one of the data control units (220) outputs the associated one stream of data using the specific channel access protocol associated therewith; and,
obtaining the single output stream of data from the plurality of streams of data by prioritizing each of the plurality of streams of data obtained from the selected ones of the plurality of data control units (220) **characterised by**:
each of the data control units (220) being capable of implementing a plurality of channel access protocols, said specific channel access protocol for each data control unit (220) being selected from said plurality of channel access protocols.

2. A method according to claim 1, wherein the steps of operating and obtaining results in a slotted transmission of data packets from the plurality of streams of data.

3. A method according to claim 1 or claim 2, wherein the step of providing includes ensuring that each of the selected ones of the queue control units is programmed to access one of the streams of data.

4. A method according to claim 3, wherein the step of providing includes ensuring that each of the selected ones of the queue control units is programmed to operate based upon a plurality of selected parameters, each of the plurality of selected parameters being chosen from a group of possible values available for each of the plurality of selected parameters.

5. A method according to claim 4, wherein the step of providing includes as one of the parameters a data rate, and the group of possible values associated with the data rate parameter is a plurality of possible data rates.

6. A method according to claim 4, wherein the step of providing includes as one of the parameters a burst characteristic, and the group of possible values associated with the burst characteristic is one of a plurality of possible burst lengths or one of a plurality of possible periodicities.

7. A method according to any of claims 4 to 6, wherein the step of providing includes ensuring that each of the selected ones of the plurality of data control units is programmed to implement the specific channel access protocol on at least one of the plurality of streams of data.

8. A method according to claim 7, wherein the step of providing includes ensuring that each of the selected ones of the plurality of data control units is programmed based upon a plurality of selected parameters, each of the plurality of selected parameters being chosen from a group of possible values available for each of the plurality of selected parameters.

9. A method according to claim 8, wherein the step of providing includes as one of the parameters a channel access protocol, and the group of possible values associated with the channel access protocol parameter is a plurality of possible channel access protocols.

10. A method according to claim 9, wherein the plurality of possible channel access protocols include at least one of polling, TDMA, and EDCF.

11. A method according to claim 10, wherein the channel access protocol is HCF polling.

12. A method according to claim 9, wherein the channel access protocol is a special PHY channel access mechanism.

13. A method according to any of claims 8 to 12, wherein the step of providing includes as one of the parameters a contention window, and the group of possible values associated with the contention window parameter is a plurality of possible contention windows, each of the possible contention windows having a minimum value and a maximum value.

14. A method according to any of claims 8 to 13, wherein the step of obtaining the single output stream includes the step of determining which of the plurality of data control units are ready to transmit.

15. A method according to claim 14, wherein the step of operating includes the step of each of the plurality of data control units receiving a ready signal obtained from the queue control unit coupled thereto indicating that at least a portion of the stream of data associated therewith is ready to transmit.

16. A method according to claim 15, wherein the during the step of obtaining, the prioritizing considers each of the plurality of data control units that have at least the portion of the stream of data associated therewith ready to transmit and have received the ready signal from one of the queue control units.

17. A method according to claim 16, wherein:
the step of providing causes the coupling of a certain plurality of the selected ones of the plurality of queue control units to one of the selected ones of the plurality of data control units, such that each queue output data path associated with each of the certain plurality of the selected ones of the plurality of queue control units is capable of being coupled to the data input data path of the one of the selected ones of the plurality of data control units; and
each of the certain plurality of the selected ones of the plurality of queue control units provides a ready signal to the one of the selected ones of the plurality of data control units.

18. A method according to claim 17, wherein the step of operating includes operating the one of the selected ones of the plurality of data control units so that priority is determined between the certain plurality of queue control units coupled thereto.

19. A method according to claim 18, wherein the step of providing includes the step of configuring at least one of (a) the prioritizing of certain ones of the plurality of streams of data used in the step of obtaining, (b) the coupling of the queue output data path of certain selected ones of the queue control units and the data input data path of certain selected ones of the plurality of data control units, and (c) certain ones of the plurality of selected parameters.

20. A method according to claim 18, wherein the step of determining priority determines priority using a round robin priority scheme.

21. A method according to any of claims 3 to 20, wherein the single output stream includes as a first portion of the single output stream the stream of data from a particular selected one of the queue control units and an associated selected one of the data control units coupled thereto having a highest priority.

22. A method according to claim 21, wherein the highest priority is associated with beacon generation.

23. A method according to claim 22, wherein, during the step of operating, between instances of beacon generation, one of the queue control units also implements a power savings scheme.

24. A method according to any of claims 1 to 23, wherein the step of providing provides for at least two selected ones of the plurality of queue control units and two of the selected ones of the data control units coupled thereto to operate upon two different respective streams of data associated therewith using a different channel access protocol on each different stream of data.

25. A method according to claim 24, wherein one of the channel access protocols is dependent on rate and another of the channel access protocols is dependent on priority, or one of the channel access protocols is dependent on rate and another of the channel access protocols is dependent on polling, or one of the channel access protocols is dependent on polling and another of the channel access protocols is dependent on priority.

26. A method according to any of claims 1 to 25, wherein the step of obtaining obtains a single packet at a time from each of the plurality of data control units.

27. A method according to any of claims 1 to 25, wherein the step of obtaining obtains more than one packet at a time from certain ones of the plurality of data control units.

28. A method according to claim 1, wherein the step of providing causes the coupling of a certain plurality of selected queue control units to one of the selected data control units, such that each queue output data path associated with each of the certain plurality of selected queue control units is capable of being coupled to the data input data path of the one selected data control unit.

29. A method according to any of claims 1 to 28, wherein the step of providing includes the step of configuring at least one of (a) the prioritizing of certain ones of the plurality of streams of data used in the step of obtaining, (b) the coupling of the queue output data path of certain selected ones of the queue control units and the data input data path of certain selected ones of the plurality of data control units, and (c) certain ones of the plurality of selected parameters.

30. A method according to any of claims 1 to 29, wherein the step of providing includes providing at least two of the plurality of streams to one of the selected queue control units.

31. A method according to any of claims 1 to 30, wherein the step of providing also includes, for certain of the data control units, providing for final formatting of the stream of data.

32. A method according to claim 31, wherein the step of providing for final formatting includes providing for at least one of error check coding, cryptography and compression.

33. A method according to any of claims 1 to 32, further including the step of transmitting the single output stream of data wirelessly.

34. Apparatus for determining priority in a communication system that has a priority scheme with a predetermined number of available priorities, the apparatus in use operating upon a plurality of data streams each containing a plurality of packets, the apparatus comprising:
a plurality of queue control units (210), each queue control unit (210) having a queue input for inputting one of the data streams and a queue output for outputting the one data stream;
a plurality of data control units (220), each data control unit (220) having a data input coupled to one of the queue outputs and a data output and further being capable of implementing a specific channel access protocol; and,
a priority selector (240) coupled to each data output, the priority selector (240) being capable of causing the data control units (220) to output certain ones of the plurality of packets associated with the data stream to the priority selector (240) one at a time according to priority rules **characterised by**:
each of the queue control units (210) providing at least one traffic shaping function to the one data stream; and by:
each of the data control units (220) being capable of implementing a plurality of channel access protocols, said specific channel access protocol for each data control unit (220) being selected from said plurality of channel access protocols.

35. Apparatus according to claim 34, wherein the plurality of queue control units (210) exceed in number a predetermined number of available priorities.

36. Apparatus according to claim 35, wherein the plurality of data control units (220) equal in number the predetermined number of available priorities.

37. Apparatus according to any of claims 34 to 36, wherein each of the queue outputs can be coupled to any one of the data inputs.

38. Apparatus according to any of claims 34 to 37, wherein the priority rules grant priority to a particular data stream associated with a beacon.

39. Apparatus according to any of claims 34 to 38, wherein certain ones of the plurality of queue control units include different traffic shaping parameters.

40. Apparatus according to any of claims 34 to 39, wherein each queue control unit (210) provides a readiness indication to the data control unit (220) to which the particular queue control unit (210) is coupled, the readiness indicator being used to determine whether the particular queue control unit (210) is ready to transmit the data stream associated therewith.

41. Apparatus according to any of claims 34 to 40, wherein each of the queue control units (210) and data control units (220) is programmable.

42. Apparatus according to claim 41, wherein each queue control unit (210) is programmed to access one of the streams of data.

43. A method according to claim 41 or claim 42, wherein each queue control unit (210) is programmed to operate based upon a plurality of selected parameters, each of the plurality of selected parameters being chosen from a group of possible values available for each of the plurality of selected parameters.

44. Apparatus according to claim 43, wherein included as one of the parameters is a data rate, and the group of possible values associated with the data rate parameter is a plurality of possible data rates.

45. Apparatus according to claim 43, wherein included as one of the parameters is a burst characteristic, and the group of possible values associated with the burst characteristic parameter is one of a plurality of possible burst lengths and one of a plurality of possible periodicities.

46. Apparatus according to any of claims 43 to 45, wherein each data control unit (220) is programmed to implement the specific channel access protocol on at least one of the plurality of streams of data.

47. Apparatus according to claim 41, wherein each data control unit (220) is programmed based upon a plurality of selected parameters, each of the plurality of selected parameters being chosen from a group of possible values available for each of the plurality of selected parameters.

48. Apparatus according to claim 47, wherein one of the parameters includes a channel access protocol, and the group of possible values associated with the channel access protocol parameter is a plurality of possible channel access protocols.

49. Apparatus according to claim 48, wherein the possible channel access protocols include at least one of polling, TDMA, and EDCF.

50. Apparatus according to claim 49, wherein the channel access protocol is HCF polling.

51. Apparatus according to any of claims 47 to 50, wherein one of the parameters is a contention window, and the group of possible values associated with the contention window parameter is a plurality of possible contention windows, each of the possible contention windows having a minimum value and a maximum value.

52. Apparatus according to any of claims 41 to 51, wherein each of the queue control units (210) and each of the data control units (220) is formed using the same architecture.

53. Apparatus according to claim 52, wherein the plurality of queue control units (210) and the data control units (220) coupled thereto each operate in parallel and independently.

54. Apparatus according to any of claims 34 to 53, comprising a transmitter for wirelessly transmitting the certain ones of the plurality of packets associated with each data stream that are output from the priority selector.

## Patentansprüche

1. Verfahren zum Disponieren einer Vielzahl von Datenströmen, um einen einzigen Ausgangsdatenstrom zu bilden, wobei jeder aus der Vielzahl von Datenströmen eine Vielzahl von Datenpaketen umfasst, wobei das Verfahren folgende Schritte aufweist:
Bereitstellen einer Vielzahl von Warteschlangensteuereinheiten (210), die jeweils mindestens auf einen aus der Vielzahl von Datenströmen zugreifen können, und einer Vielzahl von Datensteuereinheiten (220), die jeweils ein spezifisches Kanalzugriffsprotokoll an mindestens einem aus der Vielzahl von Datenströmen implementieren können, wobei jede Warteschlangensteuereinheit (210) einen Warteschlangenausgangsdatenpfad hat, der mit einem Dateneingangsdatenpfad einer aus der Vielzahl der Datensteuereinheiten (220) gekoppelt werden kann;
Betreiben von Ausgewählten aus der Vielzahl an Warteschlangensteuereinheiten (210) in paralleler Weise und von Ausgewählten aus der Vielzahl der Datensteuereinheiter (220) in paralleler Weise, so dass:
jede Ausgewählte der Warteschlangensteuereinheiten (210) auf einen Zugewiesenen aus der Vielzahl von Datenströmen zugreift und den zugewiesenen Datenstrom einer Zugewiesenen und Ausgewählten der Datensteuereinheiten (220), die hiermit gekoppelt ist, bereitstellt; und
jede Zugewiesene und Ausgewählte der Datensteuereinheiten (220) den zugewiesenen Datenstrom unter Verwendung des spezifischen Kanalzugriffsprotokolls, das hiermit verknüpft ist, ausgibt; und
Gewinnen des einzigen Ausgangsdatenstroms aus der Vielzahl von Datenströmen durch Priorisieren eines jeden aus der Vielzahl an Datenströmen, welcher aus den Ausgewählten aus der Vielzahl von Datensteuereinheiten (220) gewonnen wird, **dadurch gekennzeichnet, dass**
jede der Datensteuereinheiten (220) eine Vielzahl von Kanalzugriffsprotokollen implementieren kann und das spezifizierte Kanalzugriffsprotokoll für jede Datensteuereinheit (220) aus der Vielzahl von Kanalzugriffsprotokollen ausgewählt wird.

2. Verfahren nach Anspruch 1, wobei die Schritte des Betreibens und Gewinnens in einer durch Taktimpulse synchronisierten Übertragung von Datenpaketen von der Vielzahl von Datenströmen resultieren.

3. Verfahren nach Anspruch 1 oder Anspruch 2, wobei der Bereitstellungsschritt umfasst, dass gewährleistet wird, dass jede der Ausgewählten der Warteschlangensteuereinheiten zum Zugriff auf einen der Datenströme programmiert ist.

4. Verfahren nach Anspruch 3, wobei der Bereitstellungsschritt umfasst, dass gewährleistet wird, dass jede der ausgewählten Warteschlangensteuereinheiten programmiert ist, um auf der Grundlage einer Vielzahl von ausgewählten Parametern zu arbeiten, wobei die Vielzahl von ausgewählten Parametern ausgewählt ist aus einer Gruppe von möglichen Werten, die für jeden aus der Vielzahl von ausgewählten Parametern verfügbar sind.

5. Verfahren nach Anspruch 4, wobei der Bereitstellungsschritt als einen der Parameter eine Datenrate umfasst und die Gruppe an möglichen Werten, die mit dem Datenratenparameter verknüpft sind, eine Vielzahl von möglichen Datenraten ist.

6. Verfahren nach Anspruch 4, wobei der Bereitstellungsschritt als einen der Parameter eine Burst-Charakteristik umfasst und die Gruppe von möglichen Werten, die mit der Burstcharakteristik verknüpft sind, eine von einer Vielzahl von möglichen Burstlängen oder eine von einer Vielzahl von möglichen Periodizitäten ist.

7. Verfahren nach einem der Ansprüche 4 bis 6, wobei der Bereitstellungsschritt umfasst, dass gewährleistet wird, dass jede der Ausgewählten aus der Vielzahl von Datensteuereinheiten so programmiert ist, dass das spezifische Kanalzugriffsprotokoll an zumindest einem aus der Vielzahl von Datenströmen implementiert wird.

8. Verfahren nach Anspruch 7, wobei der Bereitstellungsschritt umfasst, dass gewährleistet wird, dass jede der Ausgewählten aus der Vielzahl von Datensteuereinheiten auf Grundlage einer Vielzahl von ausgewählten Parametern programmiert ist, wobei jeder aus der Vielzahl von ausgewählten Parametern aus einer Gruppe von möglichen Werten ausgewählt ist, die für jeden aus der Vielzahl von ausgewählten Parametern verfügbar sind.

9. Verfahren nach Anspruch 8, wobei der Bereitstellungsschritt als einen der Parameter ein Kanalzugriffsprotokoll umfasst und die Gruppe möglicher Werte, die mit dem Kanalzugriffsprotokollparameter verknüpft sind, eine Vielzahl von möglichen Kanalzugriffsprotokollen ist.

10. Verfahren nach Anspruch 9, wobei die Vielzahl von möglichen Kanalzugriffsprotokollen mindestens Polling, TDMA und/oder EDCF umfasst.

11. Verfahren nach Anspruch 10, wobei das Kanalzugriffsprotokoll HCF-Polling ist.

12. Verfahren nach Anspruch 9, wobei das Kanalzugriffsprotokoll ein spezieller PHY-Kanalzugriffsmechanismus ist.

13. Verfahren nach einem der Ansprüche 8 bis 12, wobei der Bereitstellungsschritt als einen der Parameter ein Konkurrenzfenster umfasst und die Gruppe möglicher Werte, die mit dem Konkurrenzfensterparameter verknüpft sind, eine Vielzahl von möglichen Konkurrenzfenstern ist, wobei jedes der möglichen Konkurrenzfenster einen Minimumwert und einen Maximumwert haben.

14. Verfahren nach einem der Ansprüche 8 bis 13, wobei der Schritt zum Gewinnen des einzigen Ausgangsdatenstroms den Schritt zur Bestimmung umfasst, welche aus der Vielzahl von Datensteuereinheiten bereit zur Übertragung ist.

15. Verfahren nach Anspruch 14, wobei der Betreibeschritt den Schritt umfasst, dass jede aus der Vielzahl von Datensteuereinheiten ein Bereitschaftssignal empfängt, das von der hiermit gekoppelten Warteschlangensteuereinheit gewonnen wird und anzeigt, dass zumindest ein Teil des hiermit verknüpften Datenstroms bereit zur Übertragung ist.

16. Verfahren nach Anspruch 15, wobei bei dem Gewinnungsschritt das Priorisieren jeder aus der Vielzahl von Datensteuereinheiten berücksichtigt, die mindestens den Teil des hiermit verknüpften Datenstroms bereit zur Übertragung haben und das Bereitschaftssignal von einer der Warteschlangensteuereinheiten empfangen haben.

17. Verfahren nach Anspruch 16, wobei:
der Bereitstellungsschritt das Koppeln einer bestimmen Vielzahl der Ausgewählten aus der Vielzahl von Warteschlangensteuereinheiten mit den Ausgewählten aus der Vielzahl von Datensteuereinheiten bewirkt, so dass jeder Warteschlangenausgangsdatenpfad, der mit jeder aus der bestimmten Vielzahl der Ausgewählten aus der Vielzahl von Warteschlangensteuereinheiten mit dem Dateneingangsdatenpfad der einen der Ausgewählten aus der Vielzahl von Datensteuereinheiten gekoppelt wird; und
jede aus der bestimmten Vielzahl der Ausgewählten aus der Vielzahl von Datensteuereinheiten ein Bereitschaftssignal für die eine der Ausgewählten aus der Vielzahl von Datensteuereinheiten bereitstellt.

18. Verfahren nach Anspruch 17, wobei der Betreibeschritt umfasst, dass die eine der Ausgewählten aus der Vielzahl von Datensteuereinheiten so arbeitet, dass eine Priorität unter der bestimmten Vielzahl von Warteschlangensteuereinheiten bestimmt wird, die hiermit gekoppelt ist.

19. Verfahren nach Anspruch 18, wobei der Bereitstellungsschritt den Schritt zum Konfigurieren von (a) der Priorisierung bestimmter aus der Vielzahl von Datenströmen, die bei dem Gewinnungsschritt verwendet werden, von (b) der Kopplung des Warteschlangenausgangsdatenpfads bestimmter Ausgewählter der Warteschlangensteuereinheiten und des Dateneingangsdatenpfads bestimmter Ausgewählter aus der Vielzahl von Datensteuereinheiten, und/oder von (c) Bestimmten aus der Vielzahl von ausgewählten Parametern umfasst.

20. Verfahren nach Anspruch 18, wobei der Schritt zur Bestimmung der Priorität die Priorität unter Verwendung eines ein Wettkampfprioritätsschemas (round robin priority scheme) bestimmt.

21. Verfahren nach einem der Ansprüche 3 bis 20, wobei der einzige Ausgangsdatenstrom als ersten Teil des einzigen Ausgangsstroms den Datenstrom von einer bestimmten Ausgewählten der Warteschlangensteuereinheiten und einer zugewiesenen, hiermit gekoppelten Ausgewählten der Datensteuereinheiten, der eine höchste Priorität hat, umfasst.

22. Verfahren nach Anspruch 21, wobei die höchste Priorität mit einer Beacon-Erzeugung verknüpft ist.

23. Verfahren nach Anspruch 22, wobei während des Betriebsschritts zwischen Instanzen der Beacon-Erzeugung eine der Warteschlangensteuereinheiten auch ein Energieeinsparschema implementiert.

24. Verfahren nach einem der Ansprüche 1 bis 23, wobei der Bereitstellungsschritt für mindestens zwei ausgewählte aus der Vielzahl von Warteschlangensteuereinheiten und zwei ausgewählte aus den Datensteuereinheiten, die hiermit gekoppelt sind, vorsieht, dass sie auf zwei verschiedene, hiermit verknüpfte jeweilige Datenströme wirkt unter Verwendung eines unterschiedlichen Kanalzugangsprotokolls für jeden sich unterscheidenden Datenstrom.

25. Verfahren nach Anspruch 24, wobei eines der Kanalzugangsprotokolle abhängig ist von der Rate und ein anderes der Kanalzugangsprotokolle abhängig ist von der Priorität oder eines der Kanalzugangsprotokolle abhängig ist von der Rate und ein anderes der Kanalzugangsprotokolle abhängig ist vom Polling oder ein Kanalzugangsprotokoll abhängig ist vom Polling und ein anderes der Kanalzugangsprotokolle abhängig ist von der Priorität.

26. Verfahren nach einem der Ansprüche 1 bis 25, wobei bei dem Gewinnungsschritt zu einem Zeitpunkt ein einziges Datenpaket von jedem aus der Vielzahl der Datensteuereinheiten gewonnen wird.

27. Verfahren nach einem der Ansprüche 1 bis 25, wobei bei dem Gewinnungsschritt zu einem Zeitpunkt mehr als ein Datenpaket für bestimmte aus der Vielzahl von Datensteuereinheiten gewonnen wird.

28. Verfahren nach Anspruch 1, wobei der Bereitstellungsschritt die Kopplung einer bestimmten Vielzahl ausgewählter Warteschlangensteuereinheiten mit einer der ausgewählten Datensteuereinheiten bewirkt, so dass jeder Warteschlangenausgangsdatenpfad, der mit jeder aus der bestimmten Vielzahl von ausgewählten Warteschlangensteuereinheiten verknüpft ist, mit dem Dateneingangsdatenpfad dieser ausgewählten Datensteuereinheit gekoppelt werden kann.

29. Verfahren nach einem der Ansprüche 1 bis 28, wobei der Bereitstellungsschritt den Schritt zur Konfigurierung von (a) der Priorisierung bestimmter aus der Vielzahl von Datenströmen, die bei dem Gewinnungsschritt verwendet werden, von (b) der Kopplung des Warteschlangenausgangsdatenpfads bestimmter ausgewählter der Warteschlangensteuereinheiten und des Dateneingangsdatenpfads bestimmter ausgewählter aus der Vielzahl von Datensteuereinheiten, und/oder von (c) bestimmten der Vielzahl von ausgewählten Parametern umfasst.

30. Verfahren nach einem der Ansprüche 1 bis 29, wobei der Bereitstellungsschritt die Bereitstellung von mindestens zwei aus der Vielzahl von Datenströmen für eine der ausgewählten Warteschlangensteuereinheiten umfasst.

31. Verfahren nach einem der Ansprüche 1 bis 30, wobei der Bereitstellungsschritt auch für bestimmte der Datensteuereinheiten eine Bereitstellung zum abschließenden Formatieren des Datenstroms umfasst.

32. Verfahren nach Anspruch 31, wobei der Bereitstellungsschritt zum abschließenden Formatieren auch ein Bereitstellen für ein Fehlerprüfcodieren, eine Kryptografie und/oder eine Kompression umfasst.

33. Verfahren nach einem der Ansprüche 1 bis 32, des Weiteren umfassend den Schritt zum drahtlosen Übertragen des einzigen Ausgangsdatenstroms.

34. Vorrichtung zur Bestimmung einer Priorität in einem Kommunikationssystem, das ein Prioritätsschema mit einer vorbestimmten Anzahl von verfügbaren Prioritäten hat, wobei die Vorrichtung im Betrieb auf eine Vielzahl von Datenströmen einwirkt, die jeweils eine Vielzahl von Datenpaketen umfasst, wobei die Vorrichtung umfasst:
eine Vielzahl von Warteschlangensteuereinheiten (210), wobei jede Warteschlangensteuereinheit (210) einen Warteschlangeneingang zum Eingeben eines der Datenströme und einen Warteschlangenausgang zum Ausgeben dieses Datenstroms hat;
eine Vielzahl von Datensteuereinheiten (220), wobei jede Datensteuereinheit (220) einen Dateneingang, der mit einem der Warteschlangenausgänge gekoppelt ist, und einen Datenausgang hat und des Weiteren ein spezifisches Kanalzugangsprotokoll implementieren kann; und
einen Prioritätsselektor (240), der mit jedem Datenausgang gekoppelt ist, wobei der Prioritätsselektor (240) die Datensteuereinheit (220) so ansteuern kann, dass zu einem Zeitpunkt gemäß Prioritätsregeln bestimmte aus der Vielzahl von mit dem Datenstrom verknüpften Datenpaketen an den Prioritätsselektor (240) ausgegeben werden, **dadurch gekennzeichnet, dass**:
jede der Warteschlangensteuereinheiten (210) zumindest eine Traffic-Shaping-Funktion für diesen einen Datenstrom bereitstellt; und dass:
jede der Datensteuereinheiten (220) eine Vielzahl von Kanalzugangsprotokollen implementieren kann, wobei das spezifische Kanalzugangsprotokoll für jede Datensteuereinheit (220) aus der Vielzahl an Kanalzugangsprotokollen ausgewählt wird.

35. Vorrichtung nach Anspruch 34, wobei die Vielzahl von Warteschlangensteuereinheiten (210) zahlenmäßig eine vorab festgelegte Anzahl an verfügbaren Prioritäten übertrifft.

36. Vorrichtung nach Anspruch 35, wobei die Vielzahl an Datensteuereinheiten (220) zahlenmäßig gleich der vorab festgelegten Anzahl an verfügbaren Prioritäten ist.

37. Vorrichtung nach einem der Ansprüche 34 bis 36, wobei jeder der Warteschlangenausgänge mit jedem der Dateneingänge gekoppelt werden kann.

38. Vorrichtung nach einem der Ansprüche 34 bis 37, wobei die Prioritätsregeln einem bestimmten Datenstrom, der mit einem Beacon verknüpft ist, eine Priorität gewähren.

39. Vorrichtung nach einem der Ansprüche 34 bis 38, wobei bestimmte aus der Vielzahl von Warteschlangensteuereinheiten verschiedene Traffic-Shaping-Parameter umfassen.

40. Vorrichtung nach einem der Ansprüche 34 bis 39, wobei jede Warteschlangensteuereinheit (210) eine Bereitschaftsanzeige für die Datensteuereinheit (220) bereitstellt, mit der die bestimmte Warteschlangensteuereinheit (210) gekoppelt ist, wobei die Bereitschaftsanzeige verwendet wird, um zu bestimmen, ob die bestimmten Warteschlangensteuereinheiten (210) bereit sind, den hiermit verknüpften Datenstrom zu übertragen.

41. Vorrichtung nach einem der Ansprüche 34 bis 40, wobei jede der Warteschlangensteuereinheiten (210) und der Datensteuereinheiten (220) programmierbar ist.

42. Vorrichtung nach Anspruch 41, wobei jede Warteschlangensteuereinheit (210) programmiert ist, um auf die Datenströme zuzugreifen.

43. Vorrichtung nach Anspruch 41 oder Anspruch 42, wobei jede Warteschlangensteuereinheit (210) programmiert ist, um in Abhängigkeit von einer Vielzahl von ausgewählten Parametern zu arbeiten, wobei jeder aus der Vielzahl von ausgewählten Parametern aus einer Gruppe von möglichen Werten ausgewählt ist, die für jeden aus der Vielzahl von ausgewählten Parametern verfügbar sind.

44. Vorrichtung nach Anspruch 43, wobei als einer der Parameter eine Datenrate enthalten ist und die Gruppe von möglichen Werten, die mit dem Datenratenparameter verknüpft sind, eine Vielzahl von möglichen Datenraten ist.

45. Vorrichtung nach Anspruch 43, wobei als einer der Parameter eine Burst-Charakteristik enthalten ist und die Gruppe an möglichen Werten, die mit dem Burst-Charakteristikparameter verknüpft sind, eine aus einer Vielzahl von möglichen Burstlängen und eine aus einer Vielzahl von möglichen Periodizitäten ist.

46. Vorrichtung nach einem der Ansprüche 43 bis 45, wobei jede Datensteuereinheit (220) programmiert ist, das spezifische Kanalzugangsprotokoll an zumindest einem aus der Vielzahl von Datenströmen zu implementieren.

47. Vorrichtung nach Anspruch 41, wobei jede Datensteuereinheit (220) auf Grundlage einer Vielzahl von ausgewählten Parametern programmiert ist, wobei die Vielzahl von ausgewählten Parametern aus einer Gruppe von möglichen Werten ausgewählt ist, die für jeden aus der Vielzahl von ausgewählten Parametern verfügbar sind.

48. Vorrichtung nach Anspruch 47, wobei einer der Parameter ein Kanalzugangsprotokoll umfasst und die Gruppe an möglichen Werten, die mit dem Kanalzugangsprotokollparameter verknüpft sind, eine Vielzahl von möglichen Kanalzugangsprotokollen ist.

49. Vorrichtung nach Anspruch 48, wobei die möglichen Kanalzugangsprotokolle zumindest Polling, TDMA und/oder EDCF umfassen.

50. Vorrichtung nach Anspruch 49, wobei das Kanalzugangsprotokoll HCF-Polling ist.

51. Vorrichtung nach einem der Ansprüche 47 bis 50, wobei einer der Parameter ein Konkurrenzfenster und die Gruppe an möglichen Werten, die mit dem Konkurrenzfensterparameter verknüpft sind, eine Vielzahl von möglichen Konkurrenzfenstern ist, wobei jedes der möglichen Konkurrenzfenster einen Minimumwert und einen Maximumwert hat.

52. Vorrichtung nach einem der Ansprüche 41 bis 51, wobei jede der Warteschlangensteuereinheiten (210) und jede der Datensteuereinheiten (220) unter Verwendung der gleichen Architektur ausgebildet ist.

53. Vorrichtung nach Anspruch 52, wobei die Vielzahl an Warteschlangensteuereinheiten (210) und der hiermit gekoppelten Datensteuereinheiten (220) jeweils parallel und unabhängig arbeiten.

54. Vorrichtung nach einem der Ansprüche 34 bis 53, umfassend einen Transmitter zur drahtlosen Übertragung der bestimmten aus der Vielzahl von mit jedem Datenstrom verknüpften Datenpaketen, die von dem Prioritätsselektor ausgegeben werden.

## Revendications

1. Procédé d'ordonnancement d'une pluralité de flux de données pour former un flux de sortie unique de données, chacun de la pluralité de flux de données incluant une pluralité de paquets, le procédé comprenant les étapes consistant à :
fournir une pluralité d'unités de commande de file d'attente (210) qui sont chacune capables d'accéder à au moins un de la pluralité de flux de données et une pluralité d'unités de commande de données (220) qui sont chacune capables de mettre en oeuvre un protocole d'accès de canal spécifique sur au moins un de la pluralité de flux de données, chaque unité de commande de file d'attente (210) ayant un chemin de données de sortie de file d'attente pouvant être couplé à un chemin de données d'entrée de données d'une de la pluralité d'unités de commande de données (220) ;
opérer des unités sélectionnées de la pluralité d'unités de commande de file d'attente (210) en parallèle et des unités sélectionnées de la pluralité d'unités de commande de données (220) en parallèle afin que :
chaque unité sélectionnée parmi les unités de commande de file d'attente (210) accède à un flux associé de la pluralité de flux de données et fournisse le un flux de données associé à une unité sélectionnée associée parmi les unités de commande de données (220) couplées à celles-ci ; et
chaque unité sélectionnée associée parmi les unités de commande de données (220) délivre le un flux de données associé en utilisant le protocole d'accès de canal spécifique qui lui est associé ; et,
obtenir le flux de sortie unique de données à partir de la pluralité de flux de données en attribuant une priorité à chacun de la pluralité de flux de données obtenus à partir des unités sélectionnées de la pluralité d'unités de commande de données (220) **caractérisé par** :
la capacité de chacune des unités de commande de données (220) à mettre en oeuvre une pluralité de protocoles d'accès de canal, ledit protocole d'accès de canal spécifique pour chaque unité de commande de données (220) étant sélectionné à partir de ladite pluralité de protocoles d'accès de canal.

2. Procédé selon la revendication 1, dans lequel les étapes d'opération et d'obtention ont pour résultat une transmission de paquets de données à segmentation temporelle à partir de la pluralité de flux de données.

3. Procédé selon la revendication 1 ou la revendication 2, dans lequel l'étape de fourniture comprend l'assurance que chacune des unités sélectionnées parmi les unités de commande de file d'attente est programmée pour accéder à un des flux de données.

4. Procédé selon la revendication 3, dans lequel l'étape de fourniture comprend l'assurance que chacune des unités sélectionnées parmi les unités de commande de file d'attente est programmée pour fonctionner d'après une pluralité de paramètres sélectionnés, chacun de la pluralité de paramètres sélectionnés étant choisi à partir d'un groupe de valeurs possibles disponible pour chacun de la pluralité de paramètres sélectionnés.

5. Procédé selon la revendication 4, dans lequel l'étape de fourniture comprend comme un des paramètres un débit de données, et le groupe de valeurs possibles associées au paramètre de débit de données est une pluralité de débits de données possibles.

6. Procédé selon la revendication 4, dans lequel l'étape de fourniture comprend comme un des paramètres une caractéristique de rafale, et le groupe de valeurs possibles associées à la caractéristique de rafale est une d'une pluralité de longueurs de rafale possibles ou une d'une pluralité de périodicités possibles.

7. Procédé selon l'une quelconque des revendications 4 à 6, dans lequel l'étape de fourniture comprend l'assurance que chacune des unités sélectionnées parmi la pluralité d'unités de commande de données est programmée pour mettre en oeuvre le protocole d'accès de canal spécifique sur au moins un de la pluralité de flux de données.

8. Procédé selon la revendication 7, dans lequel l'étape de fourniture comprend l'assurance que chacune des unités sélectionnées parmi la pluralité d'unités de commande de données est programmée d'après une pluralité de paramètres sélectionnés, chacun de la pluralité de paramètres sélectionnés étant choisi à partir d'un groupe de valeurs possibles disponible pour chacun de la pluralité de paramètres sélectionnés.

9. Procédé selon la revendication 8, dans lequel l'étape de fourniture comprend comme un des paramètres un protocole d'accès de canal, et le groupe de valeurs possibles associées au paramètre de protocole d'accès de canal est une pluralité de protocoles d'accès de canal possibles.

10. Procédé selon la revendication 9, dans lequel la pluralité de protocoles d'accès de canal possibles comprend au moins un parmi une invitation à émettre, un accès multiple par répartition dans le temps (TDMA), et une fonction de coordination répartie accrue (EDCF).

11. Procédé selon la revendication 10, dans lequel le protocole d'accès de canal est une invitation à émettre (HCF).

12. Protocole selon la revendication 9, dans lequel le protocole d'accès de canal est un mécanisme d'accès de canal (PHY) spécial.

13. Procédé selon l'une quelconque des revendications 8 à 12, dans lequel l'étape de fourniture comprend comme un des paramètres une fenêtre de contention, et le groupe de valeurs possibles associées au paramètre de fenêtre de contention est une pluralité de fenêtres de contention possibles, chacune des fenêtres de contention possibles ayant une valeur minimale et une valeur maximale.

14. Procédé selon l'une quelconque des revendications 8 à 13, dans lequel l'étape d'obtention du flux de sortie unique comprend l'étape consistant à déterminer lesquelles de la pluralité d'unités de commande de données sont prêtes à transmettre.

15. Procédé selon la revendication 14, dans lequel l'étape de fonctionnement comprend l'étape dans laquelle chacune de la pluralité d'unités de commande de données reçoit un signal prêt obtenu à partir de l'unité de commande de file d'attente couplée à celle-ci indiquant qu'au moins une partie du flux de données qui lui est associé est prêt pour une transmission.

16. Procédé selon la revendication 15 dans lequel, pendant l'étape d'obtention, l'attribution de priorités considère chacune de la pluralité d'unités de commande de données qui a au moins la partie du flux de données associé prête pour une transmission et qui a reçu le signal prêt à partir d'une des unités de commande de file d'attente.

17. Procédé selon la revendication 16, dans lequel :
l'étape de fourniture entraîne le couplage d'une certaine pluralité des unités sélectionnées parmi la pluralité d'unités de commande de file d'attente avec une des unités sélectionnées parmi la pluralité d'unités de commande de données, afin que chaque chemin de données de sortie de file d'attente associé à chacune de la certaine pluralité des unités sélectionnées parmi la pluralité d'unités de commande de file d'attente puisse être couplée au chemin de données d'entrée de données de l'une des unités sélectionnées parmi la pluralité d'unités de commande de données ; et
chacune de la certaine pluralité des unités sélectionnées parmi la pluralité d'unités de commande de file d'attente fournit un signal prêt à l'une des unités sélectionnées parmi la pluralité d'unités de commande de données.

18. Procédé selon la revendication 17, dans lequel l'étape d'opération comprend l'opération d'une des unités sélectionnées parmi la pluralité d'unités de commande de données afin qu'une priorité soit déterminée entre la certaine pluralité d'unités de commande de file d'attente couplées à celles-ci.

19. Procédé selon la revendication 18, dans lequel l'étape de fourniture comprend l'étape de configuration d'au moins un parmi (a) l'attribution de priorités à certains de la pluralité de flux de données utilisés dans l'étape d'obtention, (b) le couplage du chemin de données de sortie de file d'attente de certaines unités sélectionnées parmi les unités de commande de file d'attente et du chemin de données d'entrée de données de certaines unités sélectionnées parmi la pluralité d'unités de commande de données, et (c) certains de la pluralité de paramètres sélectionnés.

20. Procédé selon la revendication 18, dans lequel l'étape de détermination d'une priorité détermine une priorité en utilisant un schéma de priorité de permutation circulaire.

21. Procédé selon l'une quelconque des revendications 3 à 20, dans lequel le flux de sortie unique comprend comme première partie du flux de sortie unique le flux de données à partir d'une unité sélectionnée particulière des unités de commande de file d'attente et d'une unité sélectionnée associée parmi les unités de commande de données couplées à celles-ci ayant une priorité maximale.

22. Procédé selon la revendication 21, dans lequel la priorité maximale est associée à une génération de balise.

23. Procédé selon la revendication 22 dans lequel, pendant l'étape de fonctionnement entre des instances de génération de balise électromagnétique, une des unités de commande de file d'attente met également en oeuvre un schéma d'économie d'énergie.

24. Procédé selon l'une quelconque des revendications 1 à 23, dans lequel l'étape de fourniture fournit au moins deux unités sélectionnées parmi la pluralité d'unités de commande de file d'attente et deux des unités sélectionnées parmi les unités de commande de données couplées à celles-ci pour opérer sur deux flux de données différents respectifs, associés, en utilisant un protocole d'accès de canal différent sur chaque flux de données différent.

25. Procédé selon la revendication 24, dans lequel un des protocoles d'accès de canal dépend d'un débit et un autre des protocoles d'accès de canal dépend d'une priorité, ou un des protocoles d'accès de canal dépend d'un débit et un autre des protocoles d'accès de canal dépend d'une invitation à émettre, ou un des protocoles d'accès de canal dépend d'une invitation à émettre et un autre des protocoles d'accès de canal dépend d'une priorité.

26. Procédé selon l'une quelconque des revendications 1 à 25, dans lequel l'étape d'obtention obtient un seul paquet à la fois à partir de chacune de la pluralité d'unités de commande de données.

27. Procédé selon l'une quelconque des revendications 1 à 25, dans lequel l'étape d'obtention obtient plusieurs paquets à la fois à partir de certaines de la pluralité d'unités de commande de données.

28. Procédé selon la revendication 1, dans lequel l'étape de fourniture entraîne le couplage d'une certaine pluralité d'unités de commande de file d'attente sélectionnées avec une des unités de commande de données sélectionnées, afin que chaque chemin de données de sortie de file d'attente associé à chacune de la certaine pluralité d'unités de commande de file d'attente sélectionnées puisse être couplé au chemin de données d'entrée de données de la une unité de commande de données sélectionnée.

29. Procédé selon l'une quelconque des revendications 1 à 28, dans lequel l'étape de fourniture comprend l'étape de configuration d'au moins un parmi (a) l'attribution de priorités à certains de la pluralité de flux de données utilisés dans l'étape d'obtention, (b) le couplage du chemin de données de sortie de file d'attente de certaines unités sélectionnées parmi les unités de commande de file d'attente et du chemin de données d'entrée de données de certaines unités sélectionnées parmi la pluralité d'unités de commande de données, et (c) certains de la pluralité de paramètres sélectionnés.

30. Procédé selon l'une quelconque des revendications 1 à 29, dans lequel l'étape de fourniture comprend la fourniture d'au moins deux de la pluralité de flux à une des unités de commande de file d'attente sélectionnées.

31. Procédé selon l'une quelconque des revendications 1 à 30, dans lequel l'étape de fourniture comprend également, pour certaines des unités de commande de données, la fourniture de la mise en forme finale du flux de données.

32. Procédé selon la revendication 31, dans lequel l'étape de fourniture de la mise en forme finale comprend la fourniture d'au moins un parmi un codage de contrôle d'erreur, une cryptographie et une compression.

33. Procédé selon l'une quelconque des revendications 1 à 32, comprenant en outre l'étape consistant à transmettre le flux de sortie unique de données d'une façon sans fil.

34. Appareil pour déterminer une priorité dans un système de communication qui a un schéma de priorité avec un nombre prédéterminé de priorités disponibles, l'appareil, lorsqu'il est utilisé, fonctionnant sur une pluralité de flux de données contenant chacun une pluralité de paquets, l'appareil comprenant :
une pluralité d'unités de commande de file d'attente (210), chaque unité de commande de file d'attente (210) ayant une entrée de file d'attente pour recevoir un des flux de données et une sortie de file d'attente pour délivrer le un flux de données ;
une pluralité d'unités de commande de données (220), chaque unité de commande de données (220) ayant une entrée de données couplée à une des sorties de file d'attente et une sortie de données et étant en outre capable de mettre en oeuvre un protocole d'accès de canal spécifique ; et
un sélecteur de priorité (240) couplé à chaque sortie de données, le sélecteur de priorité (240) étant capable d'amener les unités de commande de données (220) à transmettre certains de la pluralité de paquets associés au flux de données au sélecteur de priorité (240), un par un, selon des règles de priorité **caractérisées par** :
chacune des unités de commande de file d'attente (210) fournissant au moins une fonction de mise en forme de trafic au un flux de données ; et par :
chacune des unités de commande de données (220) étant capable de mettre en oeuvre une pluralité de protocoles d'accès de canal, ledit protocole d'accès de canal spécifique pour chaque unité de commande de données (220) étant sélectionné à partir de ladite pluralité de protocoles d'accès de canal.

35. Appareil selon la revendication 34, dans lequel la pluralité d'unités de commande de file d'attente (210) excède en nombre un nombre prédéterminé de priorités disponibles.

36. Appareil selon la revendication 35, dans lequel la pluralité d'unités de commande de données (220) égale en nombre le nombre prédéterminé de priorités disponibles.

37. Appareil selon l'une quelconque des revendications 34 à 36, dans lequel chacune des sorties de file d'attente peut être couplée à l'une quelconque des entrées de données.

38. Appareil selon l'une quelconque des revendications 34 à 37, dans lequel les règles de priorité accordent une priorité à un flux de données particulier associé à une balise électromagnétique.

39. Appareil selon l'une quelconque des revendications 34 à 38, dans lequel certaines de la pluralité d'unités de commande de file d'attente comprennent des paramètres de mise en forme de trafic différents.

40. Appareil selon l'une quelconque des revendications 34 à 39, dans lequel chaque unité de commande de file d'attente (210) fournit une indication d'un état prêt à l'unité de commande de données (220) à laquelle l'unité de commande de file d'attente (210) particulière est couplée, l'indicateur d'état prêt étant utilisé pour déterminer si l'unité de commande de file d'attente (210) particulière est prête à transmettre le flux de données qui lui est associé.

41. Appareil selon l'une quelconque des revendications 34 à 40, dans lequel chacune des unités de commande de file d'attente (210) et des unités de commande de données (220) est programmable.

42. Appareil selon la revendication 41, dans lequel chaque unité de commande de file d'attente (210) est programmée pour accéder à un des flux de données.

43. Procédé selon la revendication 41 ou la revendication 42, dans lequel chaque unité de commande de file d'attente (210) est programmée pour fonctionner d'après une pluralité de paramètres sélectionnés, chacun de la pluralité de paramètres sélectionnés étant choisi à partir d'un groupe de valeurs possibles disponible pour chacun de la pluralité de paramètres sélectionnés.

44. Appareil selon la revendication 43, dans lequel est inclus comme un des paramètres un débit de données, et le groupe de valeurs possibles associées au paramètre de débit de données est une pluralité de débits de données possibles.

45. Appareil selon la revendication 43, dans lequel est inclus comme un des paramètres une caractéristique de rafale, et le groupe de valeurs possibles associées au paramètre de caractéristique de rafale est une d'une pluralité de longueurs de rafale possibles et une d'une pluralité de périodicités possibles.

46. Appareil selon l'une quelconque des revendications 43 à 45, dans lequel chaque unité de commande de données (220) est programmée pour mettre en oeuvre le protocole d'accès de canal spécifique sur au moins un de la pluralité de flux de données.

47. Appareil selon la revendication 41, dans lequel chaque unité de commande de données (220) est programmée d'après une pluralité de paramètres sélectionnés, chacun de la pluralité de paramètres sélectionnés étant choisi à partir d'un groupe de valeurs possibles disponible pour chacun de la pluralité de paramètres sélectionnés.

48. Appareil selon la revendication 47, dans lequel un des paramètres comprend un protocole d'accès de canal, et le groupe de valeurs possibles associées au paramètre de protocole d'accès de canal est une pluralité de protocoles d'accès de canal possibles.

49. Appareil selon la revendication 48, dans lequel les protocoles d'accès de canal possibles comprennent au moins un parmi une invitation à émettre, un accès multiple par répartition dans le temps (TDMA), et une fonction de coordination répartie accrue (EDCF).

50. Appareil selon la revendication 49, dans lequel le protocole d'accès de canal est une invitation à émettre en fonction de coordination hybride (HCF).

51. Appareil selon l'une quelconque des revendications 47 à 50, dans lequel un des paramètres est une fenêtre de contention, et le groupe de valeurs possibles associées au paramètre de fenêtre de contention est une pluralité de fenêtres de contention possibles, chacune des fenêtres de contention possibles ayant une valeur minimale et une valeur maximale.

52. Appareil selon l'une quelconque des revendications 41 à 51, dans lequel chacune des unités de commande de file d'attente (210) et chacune des unités de commande de données (220) sont formées en utilisant la même architecture.

53. Appareil selon la revendication 52, dans lequel la pluralité d'unités de commande de file d'attente (210) et les unités de commande de données (220) couplées à celles-ci fonctionnent chacune en parallèle et de façon indépendante.

54. Appareil selon l'une quelconque des revendications 34 à 53, comprenant un émetteur pour transmettre d'une façon sans fil les certains paquets parmi la pluralité de paquets associés à chaque flux de données qui sont délivrés à partir du sélecteur de priorité.
